# EUROPEAN PATENT SPECIFICATION

(11) **EP 3 730 529 B1**
(45) Date of publication and mention of the grant of the patent: **05.03.2025**
(21) Application number: 18891085.5
(22) Date of filing: 20.12.2018
(51) Int. Cl.: C08G 18/80, C08G 18/10, C08G 18/42, C08G 18/44, C08G 18/48, C08G 18/73, C08G 18/75, C08G 18/28, C08G 18/32, C08G 18/79, C09D 175/06, C09D 175/08

(54) **BLOCKED ISOCYANATE**
BLOCKIERTES ISOCYANAT
ISOCYANATE BLOQUÉ

(30) Priority: 22.12.2017 JP 2017245989
(43) Date of publication of application: 28.10.2020
(73) Proprietor: Mitsui Chemicals, Inc., Tokyo 104-0028 (JP)
(72) Inventor: KOBAYASHI, Takeshi, Sodegaura-shi, Chiba 299-0265 (JP); FUKUDA, Kazuyuki, Sodegaura-shi, Chiba 299-0265 (JP); SHIBATA, Tatsuya, Sodegaura-shi, Chiba 299-0265 (JP)
(74) Representative: Hoffmann Eitle
(86) International application number: PCT/JP2018/047053
(87) International publication number: WO 2019/124511

(56) References cited:
- EP-A1- 3 037 450
- WO-A1-2015/025776
- WO-A1-2016/139117
- WO-A1-2016/139117
- JP-A- 2002 205 458
- JP-A- 2002 521 541
- JP-A- S60 252 619

## Description

### TECHNICAL FIELD

The present invention relates to blocked isocyanate.

### BACKGROUND ART

Polyurethane resin is generally produced by mixing a polyol component (main component) with a polyisocyanate component (curing agent), and allowing them to react, and is widely used in various industrial fields.

In view of improving processability of such polyurethane resin, improvement in pot life of a mixture (in the following, referred to as polyurethane resin composition) of the polyol component and the polyisocyanate component has been desired. Thus, it has been known that blocked isocyanate, in which the isocyanate group is blocked with a blocking agent is used as the polyisocyanate component.

In blocked isocyanate, the blocking agent dissociates by heating, and the isocyanate group is regenerated, and therefore when the blocked isocyanate is used as the polyisocyanate component, pot life of the polyurethane resin composition can be improved.

For such blocked isocyanate, Patent Document 1 has proposed, for example, blocked isocyanate in which a trimer of bis(isocyanatomethyl) cyclohexane is blocked with a guanidine compound as a first blocking agent and an imidazole compound as a second blocking agent (for example, see Patent Document 1 (Examples 1 to 4)).

### Citation List

### Patent Document

Patent Document 1: Japanese Unexamined Patent Publication No. 2017-82208

### SUMMARY OF THE INVENTION

### PROBLEM TO BE SOLVED BY THE INVENTION

However, characteristics according to various use are required for polyurethane resin, and for example, when it is used for coating materials or adhesives, excellent solvent resistance, bend resistance, and shock resistance are required with good balance.

However, with the polyurethane resin using the blocked isocyanate described in Patent Document 1, improvement in solvent resistance, bend resistance, and shock resistance is limited, and they might not be secured in good balance.

The present invention provides blocked isocyanate that allows polyurethane resin to have excellent solvent resistance, bend resistance, and shock resistance with good balance.

### MEANS FOR SOLVING THE PROBLEM

The present invention [1] includes a blocked isocyanate in which a polyisocyanate compound is blocked with a blocking agent, wherein the blocked isocyanate contains a first latent isocyanate group in which an isocyanate group is blocked with a first blocking agent and a second latent isocyanate group in which an isocyanate group is blocked with a second blocking agent, the first blocking agent is represented by general formula (1) below and has a higher catalyst activity that activates the isocyanate group than that of the second blocking agent, and the polyisocyanate compound is a reaction product of a high molecular weight polyol having a number average molecular weight of 250 or more and polyisocyanate, and the high molecular weight polyol having a number average molecular weight of 250 or more is at least one polyol selected from the group consisting of polycarbonatepolyol, polyesterpolyol, and polytetramethylene ether glycol. 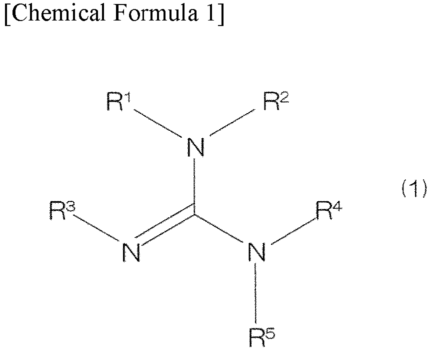 (in the formula, R¹ to R³ represent a hydrocarbon group having 1 to 12 carbon atoms or a hydrogen atom and at least one of R¹ to R³ represents a hydrogen atom, and R¹ and R³ are optionally bonded to each other to form a heterocycle. R⁴ and R⁵ represent a hydrocarbon group having 1 to 12 carbon atoms, R⁴ and R¹ are optionally bonded to each other to form a heterocycle, and R⁵ and R³ are optionally bonded to each other to form a heterocycle). Preferred embodiments of the blocked isocyanate are subject to the dependent claims.

### EFFECT OF THE INVENTION

In the blocked isocyanate of the present invention, the polyisocyanate compound before being blocked with the blocking agent is a reaction product of a high molecular weight polyol and polyisocyanate, and is modified with the high molecular weight polyol.

Then, such a polyisocyanate compound is blocked with the above-described first blocking agent represented by general formula (1), and the second blocking agent, and therefore excellent solvent resistance, bend resistance, and shock resistance can be given to the polyurethane resin produced by using the blocked isocyanate with good balance.

### DESCRIPTION OF EMBODIMENTS

The blocked isocyanate of the present invention is a polyisocyanate compound blocked with the blocking agent, and is reaction product (high molecular weight polyol-modified polyisocyanate) of a polyisocyanate compound and a blocking agent.

### <Solvent-use blocked isocyanate>

First, a solvent-use blocked isocyanate as the first embodiment of the blocked isocyanate of the present invention is described. The solvent-use blocked isocyanate is, for example, nonaqueous dispersion blocked isocyanate, and is used by, for example, dissolving it with a solvent (described later).

### (1) Polyisocyanate compound

The polyisocyanate compound is a reaction product of polyisocyanate and a high molecular weight polyol having a number average molecular weight of 250 or more and being at least one polyol selected from the group consisting of polycarbonatepolyol, polyesterpolyol, and polytetramethylene ether glycol, and has two or more free isocyanate groups.

### (1-1) Polyisocyanate

For the polyisocyanate, for example, aliphatic polyisocyanate, aromatic polyisocyanate, and araliphatic polyisocyanate are used. Polyisocyanate can be used singly, or can be used in combination of two or more.

For aliphatic polyisocyanate, for example, aliphatic polyisocyanate monomer, and aliphatic polyisocyanate derivative are used.

Examples of the aliphatic polyisocyanate monomer include ethylenediisocyanate, trimethylenediisocyanate, 1,2-propylenediisocyanate, butylenediisocyanate (tetramethylenediisocyanate, 1,2-butylenediisocyanate, 2,3-butylenediisocyanate, and 1,3-butylenediisocyanate), 1,5-pentamethylene diisocyanate (PDI), 1,6-hexamethylene diisocyanate (HDI), 2,4,4- or 2,2,4-trimethylhexamethylene diisocyanate, and 2,6-diisocyanatemethylcaproate.

The aliphatic polyisocyanate monomer also includes an alicyclic polyisocyanate monomer.

Examples of the alicyclic polyisocyanate monomer include 1,3-cyclopentanediisocyanate, 1,3-cyclopentene diisocyanate, cyclohexanediisocyanate (1,4-cyclohexanediisocyanate, 1,3-cyclohexanediisocyanate), 3-isocyanatomethyl-3,5,5-trimethylcyclohexylisocyanate (isophorone diisocyanate)(IPDI), methylenebis(cyclohexylisocyanate)(4,4'-, 2,4'- or 2,2'-methylenebis(cyclohexylisocyanate, their Trans, Trans-form, Trans, Cis- form, Cis, Cis- form, or a mixture thereof))(H₁₂MDI), methylcyclohexanediisocyanate (methyl-2,4-cyclohexanediisocyanate and methyl-2,6-cyclohexanediisocyanate), norbomanediisocyanate (various isomers or a mixture thereof)(NBDI), and bis(isocyanatomethyl) cyclohexane (1,3- or 1,4-bis(isocyanatomethyl) cyclohexane or a mixture thereof)(H₆XDI). The aliphatic polyisocyanate monomer can be used singly, or can be used in combination of two or more.

For the aliphatic polyisocyanate derivative, for example, a multimer, low molecular-weight polyol-modified product, allophanate-modified product, biuret-modified product, urea modified product, oxadiazinetrione modified product, carbodiimide modified product, and uretonimine modified product of the above-described aliphatic polyisocyanate monomer are used. The aliphatic polyisocyanate derivative can be used singly, or can be used in combination of two or more.

Examples of the multimer of the aliphatic polyisocyanate monomer include dimers (for example, uretdione-modified product), trimers (for example, isocyanurate-modified product, iminooxadiazinedione-modified product), pentamers, and heptamers of the above-described aliphatic polyisocyanate monomer.

The low molecular-weight polyol-modified product of the aliphatic polyisocyanate monomer is a reaction product (alcohol adduct) of the above-described aliphatic polyisocyanate monomer and a low molecular-weight polyol having a number average molecular weight of less than 250.

The low molecular-weight polyol is a compound having two or more hydroxyl groups, preferably three or more hydroxyl groups, and having an average molecular weight of 60 or more and less than 250, preferably 200 or less. Examples of the low molecular-weight polyol include dihydric alcohol (for example, ethylene glycol, propylene glycol, 1,3-propanediol, 1,4-butyleneglycol, 1,3-butyleneglycol, 1,2-butyleneglycol, 1,5-pentanediol, 1,6-hexanediol, diethylene glycol, triethylene glycol, dipropylene glycol, 3-methyl-1,5-pentanediol, isosorbide, 1,3- or 1,4-cyclohexanedimethanol, and a mixture thereof, 1,4-cyclohexanediol, hydrogenated bisphenol A, 1,4-dihydroxy-2-butene, 2,6-dimethyl-1-octene-3,8-diol, bisphenol A, etc.), trihydric alcohol (for example, glycerine, trimethylolpropane, etc.), tetrahydric alcohol (for example, tetramethylolmethane (pentaerythritol), diglycerol, etc.), pentahydric alcohol (for example, xylitol, etc.), hexahydric alcohol (for example, sorbitol, etc.), and heptahydric alcohol (for example, perseitol, etc.). The low molecular-weight polyol can be used singly, or can be used in combination of two or more.

Of these examples of the low molecular-weight polyol, preferably, trihydric alcohol is used, further preferably, trimethylolpropane is used.

The allophanate-modified product of aliphatic polyisocyanate monomer is, for example, a reaction product of the above-described aliphatic polyisocyanate monomer and the above-described low molecular-weight polyol in the presence of a known allophanate-forming catalyst.

The biuret-modified product of aliphatic polyisocyanate monomer is a reaction product of, for example, the above-described aliphatic polyisocyanate monomer, and water or amines in the presence of a known biuretizing catalyst.

The urea-modified product of aliphatic polyisocyanate monomer is a reaction product of, for example, the above-described aliphatic polyisocyanate monomer and diamine.

The oxadiazinetrione-modified product of aliphatic polyisocyanate monomer is a reaction product of, for example, the above-described aliphatic polyisocyanate monomer and carbon dioxide.

The carbodiimide-modified product of aliphatic polyisocyanate monomer is reaction product of, for example, decarboxylation condensation reaction of the above-described aliphatic polyisocyanate monomer.

The uretonimine-modified product of aliphatic polyisocyanate monomer is a reaction product of, for example, the above-described carbodiimide-modified product and the above-described aliphatic polyisocyanate monomer.

For the aromatic polyisocyanate, for example, an aromatic polyisocyanate monomer and aromatic polyisocyanate derivative are used.

Examples of the aromatic polyisocyanate monomer include tolylene diisocyanate (2,4- or 2,6-tolylene diisocyanate or a mixture thereof)(TDI), phenylenediisocyanate (m-, p-phenylenediisocyanate or a mixture thereof), 4,4'-diphenyldiisocyanate, 1,5-naphthalenediisocyanate (NDI), diphenylmethane diisocyanate (4,4'-, 2,4'- or 2,2'-diphenylmethane diisocyanate or a mixture thereof)(MDI), 4,4'-toluidinediisocyanate (TODI), and 4,4'-diphenyletherdiisocyanate. The aromatic polyisocyanate monomer can be used singly, or can be used in combination of two or more.

Examples of the aromatic polyisocyanate derivative include those derivatives given as examples of the above-described aliphatic polyisocyanate derivative, and to be specific, multimer, allophanate-modified product, low molecular-weight polyol-modified product, biuret-modified product, urea-modified product, oxadiazinetrione-modified product, carbodiimide-modified product, and uretonimine-modified product of the above-described aromatic polyisocyanate monomer are used. Furthermore, for the aromatic polyisocyanate derivative, polymethylene polyphenylpolyisocyanate (crude MDI, polymeric MDI) are also used.

The aromatic polyisocyanate derivative can be used singly, or can be used in combination of two or more.

For the araliphatic polyisocyanate, for example, araliphatic polyisocyanate monomer and araliphatic polyisocyanate derivative are used.

Examples of the araliphatic polyisocyanate monomer include xylylenediisocyanate (1,3- or 1,4-xylylenediisocyanate or a mixture thereof)(XDI), tetramethylxylylenediisocyanate (1,3- or 1,4-tetramethylxylylenediisocyanateor a mixture thereof)(TMXDI), and ω,ω'-diisocyanate-1,4-diethylbenzene.

Examples of the araliphatic polyisocyanate derivative include those derivatives given as examples of the above-described aliphatic polyisocyanate derivatives, and to be specific, a multimer, allophanate-modified product, low molecular-weight polyol-modified product, biuret-modified product, urea-modified product, oxadiazinetrione-modified product, carbodiimide-modified product, and uretonimine-modified product of the above-described araliphatic polyisocyanate monomer are used. The araliphatic polyisocyanate derivative can be used singly, or can be used in combination of two or more.

Of these examples of the polyisocyanate, preferably, aliphatic polyisocyanate is used, further preferably, polyisocyanate consists of aliphatic polyisocyanate.

When the polyisocyanate consists of aliphatic polyisocyanate, bend resistance and shock resistance of the polyurethane resin produced by using the blocked isocyanate can be improved reliably.

Of these examples of the aliphatic polyisocyanate, preferably, aliphatic polyisocyanate derivative is used, further preferably, trimers of the aliphatic polyisocyanate monomer, particularly preferably, isocyanurate-modified product of HDI, and isocyanurate-modified product of H₆XDI are used, particularly preferably, isocyanurate-modified product of HDI is used.

The isocyanate group of the polyisocyanate has an average functionality of, for example, 2 or more, preferably 2.5 or more, and for example, 4 or less, preferably 3.5 or less.

The polyisocyanate has an isocyanate group content (NCO%) of, for example, 2 mass% or more, preferably 5 mass% or more, and for example, 40 mass% or less, preferably 30 mass% or less.

### (1-2) High molecular weight polyol

The high molecular weight polyol is a modifier that modifies polyisocyanate. The high molecular weight polyol has a number average molecular weight of 250 or more, preferably 400 or more, more preferably 500 or more, particularly preferably 1000 or more, and for example, 10000 or less, preferably 5000 or less.

The high molecular weight polyol is at least one polyol selected from the group consisting of p polyesterpolyol, polycarbonatepolyol, and polytetramethylene ether glycol. The high molecular weight polyol can be used singly, or can be used in combination of two or more.

Examples of the polyesterpolyol include adipate polyesterpolyol, phthalic acid polyesterpolyol, and lactone polyesterpolyol.

Examples of the polycarbonatepolyol include a ring-opening polymerization product of ethylene carbonate using the above-described low-molecular-weight polyols as an initiator, and amorphous polycarbonate polyols obtained by copolymerization of the above-described dihydric alcohol and ring-opening polymerization product.

The high molecular weight polyol is at least one polyol selected from the group consisting of polycarbonatepolyol, polyesterpolyol, and polytetramethylene ether glycol. Of these, further preferably, polytetramethylene ether glycol is used.

When the high molecular weight polyol is polyol selected from the above-described group, solvent resistance, bend resistance, and shock resistance can be given reliably with good balance to polyurethane resin produced by using the blocked isocyanate.

### (2) Preparation of polyisocyanate compound

Next, description is given below of preparation of the polyisocyanate compound.

To prepare the polyisocyanate compound, the above-described polyisocyanate is allowed to react with the above-described high molecular weight polyol at a ratio at which the isocyanate group in free state remains.

The equivalent ratio (OH/NCO) of the hydroxyl group of high molecular weight polyol relative to the isocyanate group of polyisocyanate is, for example, 0.005 or more, preferably 0.02 or more, and for example, 0.2 or less, preferably 0.04 or less.

The mixing ratio of the high molecular weight polyol relative to 100 parts by mass of the polyisocyanate is, for example, 2 parts by mass or more, preferably 5 parts by mass or more, and for example, 30 parts by mass or less, preferably 20 parts by mass or less.

The reaction between polyisocyanate and high molecular weight polyol is conducted, for example, in an inert gas (for example, nitrogen gas, argon gas, etc.) atmosphere in the presence of, for example, an organic solvent.

Examples of the organic solvent include ketones (for example, acetone, methyl ethyl ketone, methylisobutylketone, cyclohexanone, etc.), nitriles (for example, acetonitrile, etc.), alkylesters (for example, methyl acetate, ethyl acetate, butyl acetate, isobutyl acetate, etc.), aliphatic hydrocarbons (for example, n-hexane, n-heptane, octane, cyclohexane, methylcyclohexane, etc.), aromatic hydrocarbons (for example, toluene, xylene, ethylbenzene, etc.), glycoletheresters (for example, methylcellosolveacetate, ethylcellosolveacetate, methylcarbitolacetate, ethylcarbitolacetate, ethylene glycolethyletheracetate, propylene glycolmethyletheracetate, 3-methyl-3-methoxybutylacetate, ethyl-3-ethoxypropionate, etc.), ethers (for example, diethylether, tetrahydrofuran, dioxane, 1,2-dimethoxyethane, diethylene glycol dimethylether, diethylene glycoldiethylether, diethylene glycolethylmethylether, dipropylene glycol dimethyl ether, dipropylene glycoldiethylether, etc.), halogenated aliphatic hydrocarbons (for example, methyl chloride, methylene chloride, chloroform, carbon tetrachloride, methyl bromide, methylene iodide, dichloroethane, etc.), and polar aprotic solvents (for example, N-methylpyrrolidone, dimethylformamide, N,N'-dimethylacetamide, dimethyl sulfoxide, and hexamethylphosphonylamide, etc.). The organic solvent can be used singly, or can be used in combination of two or more.

Of these examples of the organic solvent, preferably, ethers are used.

The organic solvent is added in an amount of, relative to 100 parts by mass of polyisocyanate, for example, 1 part by mass or more, preferably 50 parts by mass or more, and for example, 1000 parts by mass or less, preferably 100 parts by mass or less.

The reaction temperature is, for example, 50°C or more, preferably 70°C or more, and for example, 150°C or less, preferably 110°C or less, and the reaction pressure is, for example, atmospheric pressure. The reaction time is, for example, 0.5 hours or more, preferably 1 hour or more, and for example, 120 hours or less, preferably 72 hours or less.

Completion of the reaction can be determined by, for example, checking if there is no change in the isocyanate amount measured with titration.

The polyisocyanate can be allowed to react with the high molecular weight polyol without solvent.

The polyisocyanate compound in which two or more free isocyanate groups remain is prepared in the above-described manner.

The average functionality of the isocyanate group in the polyisocyanate compound is, for example, 2 or more, preferably 2.5 or more, and for example, 4 or less, preferably 3.5 or less.

In the polyisocyanate compound, the isocyanate group content (NCO%) is, for example, 5 mass% or more, preferably 13 mass% or more, and for example, 25 mass% or less, preferably 16 mass% or less.

In the polyisocyanate compound, the free-state isocyanate group content is, for example, 0.01 mass% or more, preferably 0.05 mass% or more, and for example, 1.3 mass% or less, preferably 1.1 mass% or less.

In the polyisocyanate compound, the high molecular weight polyol-derived polyol unit content is, for example, 0.1 mass% or more, preferably 1 mass% or more, more preferably 5 mass% or more, particularly preferably 8 mass% or more, and for example, 40 mass% or less, preferably 30 mass% or less.

When the polyol unit content in the polyisocyanate compound is the above-described lower limit or more, solvent resistance of the polyurethane resin can be improved reliably. When the polyol unit content in the polyisocyanate compound is the above-described upper limit or less, bend resistance and shock resistance of the polyurethane resin can be improved.

Preparation of the polyisocyanate compound is not limited to reaction between one type of polyisocyanate and one type of high molecular weight polyol. Examples of the reaction between polyisocyanate and high molecular weight polyol include the following: one type of polyisocyanate and two or more types of high molecular weight polyol, two or more types of polyisocyanate and one type of high molecular weight polyol, two or more types of polyisocyanate and two or more types of high molecular weight polyol. The polyisocyanate compound can be prepared by these reactions.

To the polyisocyanate compound, a polyisocyanate compound that is not modified with the high molecular weight polyol can also be mixed.

### (3) Blocking agent

The blocking agent includes a first blocking agent and a second blocking agent.

Therefore, the blocked isocyanate contains a first latent isocyanate group in which the isocyanate group is blocked with a first blocking agent, and a second latent isocyanate group in which the isocyanate group is blocked with a second blocking agent.

### (3-1) First blocking agent

The first blocking agent causes inactivation by blocking the isocyanate group, while after de-blocking, activates the isocyanate group. Furthermore, the first blocking agent has catalysis activity (described later) to activate the isocyanate group under a state in which the isocyanate group is blocked or de-blocked.

To be specific, the first blocking agent has a higher catalysis activity (described later) that activates the isocyanate group than that of the second blocking agent described later, and is represented by the general formula (1) below. The first blocking agent is a guanidine compound having a guanidine skeleton. 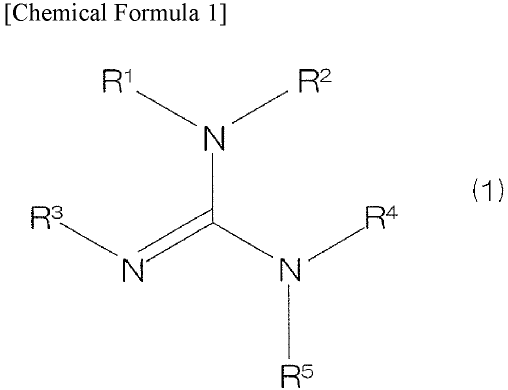 (in the formula, R¹ to R³ represent a hydrocarbon group having 1 to 12 carbon atoms or a hydrogen atom and at least one of R¹ to R³ represent a hydrogen atom, and R¹ and R³ are optionally bonded to each other to form a heterocycle. R⁴ and R⁵ represent a hydrocarbon group having 1 to 12 carbon atoms, R⁴ and R¹ are optionally bonded to each other to form a heterocycle, and R⁵ and R³ are optionally bonded to each other to form a heterocycle)

In the above-described general formula (1), R¹ to R³ may be the same or different from each other, represents a hydrocarbon group having 1 to 12 carbon atoms or a hydrogen atom, and at least one of R¹ to R³ represents a hydrogen atom.

For the hydrocarbon group having 1 to 12 carbon atoms represented by R¹ to R³, for example, an alkyl group having 1 to 12 carbon atoms, and an aryl group having 6 to 12 carbon atoms are used.

For the alkyl group having 1 to 12 carbon atoms, for example, a chain alkyl group having 1 to 12 carbon atoms and a cyclic alkyl group having 3 to 12 carbon atoms are used.

For the chain alkyl group having 1 to 12 carbon atoms, a straight chain or branched chain alkyl group having 1 to 12 carbon atoms is used, and for example, methyl, ethyl, propyl, isopropyl, butyl, isobutyl, sec-butyl, tert-butyl, pentyl, isopentyl, tert-pentyl, hexyl, heptyl, octyl, nonyl, isononyl, decyl, undecyl, and dodecyl are used.

For the cyclic alkyl group having 3 to 12 carbon atoms, for example, cyclopropyl, cyclobutyl, cyclopentyl, cyclohexyl, cycloheptyl, cyclooctyl, cyclononyl, cyclodecyl, and cyclododecyl are used.

For the aryl group having 6 to 12 carbon atoms, for example, phenyl, tolyl, xylyl, naphthyl, azulenyl, and biphenyl are used.

The hydrocarbon group having 1 to 12 carbon atoms may be the same or different from each other in R¹ to R³.

R¹ and R³ are optionally bonded to each other to form a heterocycle.

The heterocycle formed by R¹ and R³ bonded to each other is nitrogen-containing heterocycle having -N=C-N- structure, and for example, a heterocycle with 3 to 20-membered ring, preferably 3 to 10-membered ring, more preferably 3 to 8-membered ring, particularly preferably 5 to 7-membered ring are used. The heterocycle may be, for example, monocyclic or for example, a polycyclic in which a plurality of monocyclics sharing a side. The heterocycle may be a conjugated heterocycle. When R¹ and R³ are bonded to each other to form a heterocycle, R² represents a hydrogen atom.

Of these examples of R¹ and R² in the above-described general formula (1), in view of curing under low temperature, preferably, a hydrocarbon group having 1 to 12 carbon atoms is used, further preferably, an alkyl group having 1 to 12 carbon atoms is used, and particularly preferably, a chain alkyl group having 1 to 12 carbon atoms is used. When R¹ and R² are the above-described hydrocarbon group, R³ represents a hydrogen atom.

In the above-described general formula (1), R⁴ and R⁵ may be the same or different from each other, and represent a hydrocarbon group having 1 to 12 carbon atoms.

For the hydrocarbon group having 1 to 12 carbon atoms represented by R⁴ and R⁵, for example, the above-described hydrocarbon group having 1 to 12 carbon atoms is used.

R⁴ and R¹ are optionally bonded to each other to form a heterocycle, and R⁵ and R³ are optionally bonded to each other to form a heterocycle.

Heterocycle formed from these R¹, R³, R⁴, and R⁵ can be a polycyclic, in which a plurality of single rings are sharing one side. The heterocycle formed in that case is nitrogen-containing heterocycle having a -N=C-N- structure, and for example, heterocycle with 6 to 20-membered ring, preferably 6 to 15-membered ring, more preferably 6 to 12-membered ring, particularly preferably 10 to 12-membered ring heterocycle is used. The heterocycle may be a conjugated heterocycle. When R¹, R³, R⁴, and R⁵ form a heterocycle, R² represents a hydrogen atom. Examples of the heterocycle structure include, to be specific, for example, a triazabicyclo cyclic structure.

Of these examples of R⁴ and R⁵ in the above-described general formula (1), in view of curing under low temperature, preferably, a hydrocarbon group having 1 to 12 carbon atoms is used, and further preferably, an alkyl group having 1 to 12 carbon atoms is used, and particularly preferably, a chain alkyl group having 1 to 12 carbon atoms is used.

The first blocking agent represented by the above-described general formula (1) is a guanidine compound. Examples of the guanidine compound include 3,3-dialkylguanidine (for example, 3,3-dimethylguanidine, etc.), 1,1,3,3-tetraalkylguanidine (for example, 1,1,3,3-tetramethylguanidine, etc.), and 1,5,7-triazabicyclo[4.4.0]dec-5-ene are used. The first blocking agent can be used singly, or can be used in combination of two or more.

Of these examples of the first blocking agent (guanidine compound) represented by the above-described general formula (1), preferably 1,1,3,3-tetraalkylguanidine, more preferably 1,1,3,3-tetramethylguanidine (TMG) is used.

The first blocking agent has a dissociation temperature of, for example, 60°C or more, preferably 80°C or more, and for example, 150°C or less, preferably 130°C or less.

The dissociation temperature of the blocking agent can be measured by a method below (the same applies to the following).

The blocked isocyanate is applied on silicon wafer, and while heating, the temperature at which the isocyanate group regenerates is measured by IR measurement. When the blocking agent has a high catalyst activity (described later), and regenerated isocyanate group could not be observed, the dissociation temperature of the blocking agent can be measured as follows: it is mixed with the above-described polyol (low molecular-weight polyol or high molecular weight polyol), and the mixture is applied on silicon wafer, and while heating, the temperature at which the hydroxyl group of the polyol compound starts to react with the regenerated isocyanate group is observed with IR measurement.

### (3-2) Second blocking agent

The second blocking agent is a blocking agent that inactivates the isocyanate group by blocking, while after the de-blocking, the second blocking agent regenerates the isocyanate group. Furthermore, the second blocking agent is a blocking agent that does not have a catalysis activity (described later) to an extent that activates the regenerated isocyanate group, or even it has the catalysis activity (described later) to the extent that activates the regenerated isocyanate group, the catalysis activity (described later) is smaller than that of the above-described first blocking agent.

The catalyst activity of the first blocking agent and the catalyst activity of the second blocking agent can be compared by the method described in paragraph [0242] to [0247] of Japanese Unexamined Patent Publication No. 2017-82208.

Examples of the second blocking agent include an imidazole compound, alcohol compound, phenol compound, active methylene compound, amine compound, imine compound, oxime compound, carbamic acid compound, urea compound, acid amide (lactam) compound, acid imide compound, triazole compound, pyrazole compound, mercaptan compound, bisulfite, imidazoline compound, and pyrimidine compound.

Examples of the imidazole compound include the imidazole compound described in paragraph [0058] of Japanese Unexamined Patent Publication No. 2017-82208.

Examples of the imidazole compound include, to be specific, imidazole (dissociation temperature 100°C), benzimidazole, 2-methyl imidazole, 4-methyl imidazole, 2-ethylimidazole, 2-isopropyl imidazole, 2,4-dimethyl imidazole, and 2-ethyl-4-methyl imidazole.

Examples of the alcohol compound include the alcohol compound described in paragraph [0070] of Japanese Unexamined Patent Publication No. 2017-82208.

Examples of the alcohol compound include, to be specific, methanol, ethanol, 2-propanol, n-butanol, s-butanol, 2-ethylhexylalcohol, 1- or 2-octanol, cyclohexylalcohol, ethylene glycol, benzylalcohol, 2,2,2-trifluoroethanol, 2,2,2-trichloroethanol, 2-(hydroxymethyl) furan, 2-methoxyethanol, methoxypropanol, 2-ethoxyethanol, n-propoxyethanol, 2-butoxyethanol, 2-ethoxyethoxyethanol, 2-ethoxybutoxyethanol, butoxyethoxyethanol, 2-butoxyethylethanol, 2-butoxyethoxyethanol, N,N-dibutyl-2-hydroxyacetamide, N-hydroxysuccinimide, N-morpholineethanol, 2,2-dimethyl-1,3-dioxolane-4-methanol, 3-oxazolidineethanol, 2-hydroxymethylpyridine, furfuryl alcohol, 12-hydroxystearic acid, triphenylsilanol, and methacrylic acid 2-hydroxyethyl.

Examples of the phenol compound include the phenol compound described in paragraph [0071] of Japanese Unexamined Patent Publication No. 2017-82208.

Examples of the phenol compound include, to be specific, phenol, cresol, ethylphenol, n-propylphenol, isopropylphenol, n-butylphenol, s-butylphenol, t-butylphenol, n-hexylphenol, 2-ethylhexylphenol, n-octylphenol, n-nonylphenol, di-n-propylphenol, diisopropylphenol, isopropylcresol, di-n-butylphenol, di-s-butylphenol, di-t-butylphenol, di-n-octylphenol, di-2-ethylhexylphenol, di-n-nonylphenol, nitrophenol, bromophenol, chlorophenol, fluorophenol, dimethylphenol, styrenated phenol, methylsalicylate, methyl 4-hydroxybenzoate, benzyl 4-hydroxybenzoate, 2-ethylhexyl hydroxybenzoate, 4-[(dimethylamino) methyl]phenol, 4-[(dimethylamino) methyl]nonylphenol, bis(4-hydroxyphenyl) acetic acid, 2-hydroxypyridine, 2- or 8-hydroxyquinoline, 2-chloro-3-pyridinol, and pyridine-2-thiol.

Examples of the active methylene compound include the active methylene compound described in paragraph [0072] of Japanese Unexamined Patent Publication No. 2017-82208.

Examples of the active methylene compound include, to be specific, Meldrum's acid, malonate dialkyl (for example, dimethyl malonate, diethyl malonate, di-n-butyl malonate, di-t-butyl malonate, di-2-ethylhexyl malonate, methyl n-butyl malonate, ethyl n-butyl malonate, methyl s-butyl malonate, ethyl s-butyl malonate, methyl t-butyl malonate, ethyl t-butyl malonate, diethyl methyl malonate, dibenzyl malonate, diphenyl malonate, benzylmethyl malonate, ethylphenyl malonate, t-butylphenyl malonate, isopropylidene malonate, etc.), alkyl acetoacetate (for example, methyl acetoacetate, ethyl acetoacetate, n-propyl acetoacetate, isopropyl acetoacetate, n-butyl acetoacetate, t-butyl acetoacetate, benzyl acetoacetate, phenyl acetoacetate, etc.), 2-acetoacetoxyethylmethacrylate, acetylacetone, and cyanoethyl acetate.

Examples of the amine compound include the amine compound described in paragraph [0073] of Japanese Unexamined Patent Publication No. 2017-82208.

Examples of the amine compound include, to be specific, dibutylamine, diphenylamine, aniline, N-methylaniline, carbazole, bis(2,2,6,6-tetramethylpiperidinyl) amine, di-n-propylamine, diisopropylamine (dissociation temperature 130°C), isopropylethylamine, 2,2,4- or 2,2,5-trimethylhexamethyleneamine, N-isopropylcyclohexylamine, dicyclohexylamine, bis(3,5,5-trimethylcyclohexyl) amine, piperidine, 2,6-dimethylpiperidine, t-butylmethylamine, t-butylethylamine, t-butylpropylamine, t-butylisopropylamine, t-butylbutylamine, t-butylbenzylamine, t-butylphenylamine, 2,2,6-trimethylpiperidine, 2,2,6,6-tetramethylpiperidine (dissociation temperature 80°C), 2,2,6,6-tetramethylpiperidine-4-one, (dimethylamino)-2,2,6,6-tetramethylpiperidine, 6-methyl-2-piperidine, and 6-aminocaproic acid.

Examples of the imine compound include the imine compound described in paragraph [0074] of Japanese Unexamined Patent Publication No. 2017-82208.

Examples of the imine compound include, to be specific, ethylene-imine, polyethylene-imine, and 1,4,5,6-tetrahydropyrimidine.

Examples of the oxime compound include the oxime compound described in paragraph [0075] of Japanese Unexamined Patent Publication No. 2017-82208.

Examples of the oxime compound include, to be specific, formaldoxime, acetaldoxime, acetoxime, methylethylketoxime (dissociation temperature 130°C), cyclohexanoneoxime, diacetyl monoxime, benzophenone oxime, 2,2,6,6-tetramethylcyclohexanoneoxime, diisopropylketoneoxime, methyl t-butylketoneoxime, diisobutylketoneoxime, methylisobutylketoneoxime, methylisopropylketoneoxime, methyl 2,4-dimethylpentylketoneoxime, methyl 3-ethylheptylketoneoxime, methylisoamylketoneoxime, n-amylketoneoxime, 2,2,4,4-tetramethyl-1,3-cyclobutanedionemonoxime, 4,4'-dimethoxybenzophenoneoxime, and 2-heptanoneoxime.

Examples of the carbamic acid compound include the carbamic acid compound described in paragraph [0076] of Japanese Unexamined Patent Publication No. 2017-82208, to be specific, phenyl N-phenyl carbamate is used.

Examples of the urea compound include the urea compound described in paragraph [0077] of Japanese Unexamined Patent Publication No. 2017-82208, and to be specific, urea, thiourea, and ethylene urea are used.

Examples of the acid amide (lactam) compound include the acid amide (lactam) compound described in paragraph [0078] of Japanese Unexamined Patent Publication No. 2017-82208.

For the acid amide (lactam) compound, to be specific, acetanilid, N-methylacetamide, acetic acidamide, ε-caprolactam, δ-valerolactam, γ-butyrolactam, pyrrolidone, 2,5-piperazinedione, and laurolactam are used.

Examples of the acid imide compound include the acid imide compound described in paragraph [0079] of Japanese Unexamined Patent Publication No. 2017-82208, to be specific, succinimide, maleimide, and phthalimide are used.

Examples of the triazole compound include the triazole compound described in paragraph [0080] of Japanese Unexamined Patent Publication No. 2017-82208, to be specific, 1,2,4-triazole, and benzotriazole are used.

Examples of the pyrazole compound include the pyrazole compound described in paragraph [0081] of Japanese Unexamined Patent Publication No. 2017-82208.

Examples of the pyrazole compound include, to be specific, pyrazole, 3,5-dimethylpyrazole (dissociation temperature 120°C), 3,5-diisopropylpyrazole, 3,5-diphenylpyrazole, 3,5-di-t-butylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole.

Examples of the mercaptan compound include the mercaptan compound described in paragraph [0082] of Japanese Unexamined Patent Publication No. 2017-82208, to be specific, butylmercaptan, dodecylmercaptan, and hexylmercaptan are used.

Examples of the bisulfite include the bisulfite described in paragraph [0083] of Japanese Unexamined Patent Publication No. 2017-82208, to be specific, sodium bisulfite is used.

Examples of the imidazoline compound include the imidazoline compound described in paragraph [0059] of Japanese Unexamined Patent Publication No. 2017-82208, to be specific, 2-methylimidazoline and 2-phenylimidazoline are used.

Examples of the pyrimidine compound include the pyrimidine compound described in paragraph [0060] of Japanese Unexamined Patent Publication No. 2017-82208, to be specific, 2-methyl-1,4,5,6-tetrahydropyrimidine is used.

The second blocking agent has a dissociation temperature of, for example, 150°C or less, preferably 140°C or less, more preferably 130°C or less, and for example, 60°C or more.

The second blocking agent can be used singly, or can be used in combination of two or more.

In other words, the second blocking agent can consist of one type of blocking agent selected from the group consisting of imidazole compound, alcohol compound, phenol compound, active methylene compound, amine compound, imine compound, oxime compound, carbamic acid compound, urea compound, acid amide compound, acid imide compound, triazole compound, pyrazole compound, mercaptan compound, bisulfite, imidazoline compound, and pyrimidine compound, or can contain two types of blocking agents selected from the above-described group.

When two types of the second blocking agent are used in combination, of the two types of the second blocking agent, one second blocking agent is used in a greater amount than the other second blocking agent. In the following, when two types of the second blocking agent are used in combination, the one second blocking agent used in a relatively greater amount is called a main second blocking agent, and the other second blocking agent used in a relatively less amount is called a sub second blocking agent to distinguish them.

Of these examples of the second blocking agent, preferably, the imidazole compound (further preferably, imidazole), amine compound (further preferably, diisopropylamine, 2,2,6,6-tetramethylpiperidine, 2,2,6,6-tetramethylpiperidine-4-one, t-butylisopropylamine), and oxime compound (further preferably, methylethylketoxime) and pyrazole compound (more preferably 3,5-dimethylpyrazole) are used, particularly preferably, the imidazole compound (particularly preferably, imidazole), oxime compound (particularly preferably, methylethylketoxime) and pyrazole compound (particularly preferably 3,5-dimethylpyrazole) are used.

For the combination of the first blocking agent and second blocking agent, preferably, the first blocking agent is 1,1,3,3-tetraalkylguanidine (TMG), and the second blocking agent is at least one blocking agent selected from the group consisting of imidazole (IMZ), diisopropylamine (DiPA), 2,2,6,6-tetramethylpiperidine (TMPDI), 2,2,6,6-tetramethylpiperidine-4-one (TMPDO), t-butylisopropylamine (TBIPA), 3,5-dimethylpyrazole (DMP), and methylethylketoxime (MEKO). The combination below will be noted in abbreviations above for convenience.

For the combination of the first blocking agent and second blocking agent, further preferably, the following combinations are used: TMG (first blocking agent) and IMZ (second blocking agent); TMG (first blocking agent) and DMP (second blocking agent); TMG (first blocking agent) and MEKO (second blocking agent); TMG (first blocking agent) and TMPDI (second blocking agent); TMG (first blocking agent) and TMPDO (second blocking agent); TMG (first blocking agent) and TBIPA (second blocking agent); TMG (first blocking agent) and IMZ (main second blocking agent) and DMP (sub second blocking agent); TMG (first blocking agent) and DiPA (main second blocking agent) and DMP (sub second blocking agent).

The second blocking agent particularly preferably consists of one type, and for the combination of the first blocking agent and second blocking agent, the following combinations are used: TMG (first blocking agent) and IMZ (second blocking agent), TMG (first blocking agent) and DMP (second blocking agent), TMG (first blocking agent) and MEKO (second blocking agent), TMG (first blocking agent) and TMPDI (second blocking agent), TMG (first blocking agent) and TMPDO (second blocking agent), TMG (first blocking agent) and TBIPA (second blocking agent).

For the solvent-use blocked isocyanate, in view of bend resistance and shock resistance, particularly preferably, the combination of TMG (first blocking agent) and DMP (second blocking agent), and the combination of TMG (first blocking agent) and MEKO (second blocking agent) are used.

### (4) Production of solvent-use blocked isocyanate

Next, description is given below of production of solvent-use blocked isocyanate.

To produce the solvent-use blocked isocyanate, the above-described polyisocyanate compound is allowed to react with the above-described first blocking agent and the above-described second blocking agent.

The polyisocyanate compound and the first blocking agent and second blocking agent are allowed to react in sequence without particular limitation, and for example, the polyisocyanate compound and the second blocking agent are allowed to react at a rate where the isocyanate group in free state remains, and thereafter the blocked isocyanate having the isocyanate group in free state is allowed to react with the first blocking agent.

The equivalent ratio (active group/isocyanate group) of the active group that can react with the isocyanate group in the second blocking agent relative to the isocyanate group of the polyisocyanate compound is, for example, 0.2 or more, preferably 0.5 or more, and for example, 1.5 or less, preferably 1.2 or less, more preferably 1.1 or less.

The reaction between the polyisocyanate compound and second blocking agent is conducted, for example, under inert gas (for example, nitrogen gas, argon gas, etc.) atmosphere.

The reaction temperature is, for example, 0°C or more, preferably 20°C or more, and for example, 80°C or less, preferably 60°C or less, and the reaction pressure is, for example, atmospheric pressure. The reaction time is, for example, 0.5 hours or more, preferably 1.0 hour or more, and for example, 24 hours or less, preferably 12 hours or less.

In this manner, the second blocking agent blocks a portion of the isocyanate group of the polyisocyanate compound to produce the second latent isocyanate group, and the remaining portion of the isocyanate group of the polyisocyanate compound remains in free state.

When the second blocking agent as described above is used in combination of two or more, the two types of the second blocking agent can be allowed to react with the polyisocyanate compound simultaneously, or the two types of the second blocking agent can be allowed to react with the polyisocyanate compound one by one.

Then, the blocked isocyanate in which the isocyanate group in free state remains is allowed to react with the first blocking agent.

The equivalent ratio (active group/isocyanate group) of the active group that can react with the isocyanate group in the first blocking agent relative to the isocyanate group in free state in the blocked isocyanate is, for example, 0.01 or more, preferably 0.05 or more, and for example, 1.3 or less, preferably 1.2 or less, more preferably 1.1 or less.

The reaction conditions for the blocked isocyanate and first blocking agent are the same as the reaction conditions for the above-described reaction between the polyisocyanate compound and second blocking agent.

Completion of the reaction can be determined by, for example, checking disappearance or decrease of the isocyanate group using infrared spectroscopic analysis.

In this manner, the isocyanate group remained in free state in the blocked isocyanate is allowed to react with the first blocking agent to produce the first latent isocyanate group.

In this reaction, the ratio of the first blocking agent and the second blocking agent is suitably set so that the first latent isocyanate group content and the second latent isocyanate group content in the blocked isocyanate are in the predetermined range to be described later. When two types of the second blocking agent as described above are used in combination, the ratio of the main second blocking agent and the ratio of the sub second blocking agent are suitably set so that the main second latent isocyanate group content and the sub second latent isocyanate group content in the blocked isocyanate are in the predetermined range to be described later.

The above-described reactions can be performed, for example, with no solvent or in the presence of a solvent. Examples of the solvent include the above-described organic solvents and plasticizers. The solvent can be used singly, or can be used in combination of two or more.

Examples of the plasticizer include the plasticizer described in paragraph [0109] to [0117] of Japanese Unexamined Patent Publication No. 2017-82208. The plasticizer can be used singly, or can be used in combination of two or more.

In the above described manner, the solvent-use blocked isocyanate in which the isocyanate group of the polyisocyanate compound is blocked with the first blocking agent and second blocking agent is prepared.

The solvent-use blocked isocyanate contains the first latent isocyanate group that is the isocyanate group which is blocked with a first blocking agent, and the second latent isocyanate group that is the isocyanate group which is blocked with a second blocking agent in 1 molecule.

In the solvent-use blocked isocyanate, the first latent isocyanate group content relative to a total molar amount of the first latent isocyanate group and second latent isocyanate group is, for example, 1 mol% or more, preferably 5 mol% or more, more preferably 10 mol% or more, and for example, 80 mol% or less, preferably 50 mol% or less, more preferably 30 mol% or less.

In the solvent-use blocked isocyanate, the second latent isocyanate group content relative to a total molar amount of the first latent isocyanate group and second latent isocyanate group is, for example, 20 mol% or more, preferably 50 mol% or more, more preferably 70 mol% or more, and for example, 99 mol% or less, preferably 95 mol% or less, more preferably 90 mol% or less.

When the first latent isocyanate group content and the second latent isocyanate group content are in the above-described range, low temperature curing properties and pot life of the polyurethane resin composition (described later) can be improved.

When two types of the second blocking agent as described above are used in combination, the second latent isocyanate group includes a main second latent isocyanate group which is blocked with a main second blocking agent, and a sub second latent isocyanate group which is blocked with the sub second blocking agent.

In the solvent-use blocked isocyanate, the main second latent isocyanate group content relative to a total molar amount of the first latent isocyanate group and second latent isocyanate group is, for example, 15 mol% or more, preferably 40 mol% or more, more preferably 55 mol% or more, and for example, 95 mol% or less, preferably 90 mol% or less, more preferably 80 mol% or less.

In the solvent-use blocked isocyanate, the sub second latent isocyanate group content relative to a total molar amount of the first latent isocyanate group and second latent isocyanate group is, for example, 4 mol% or more, preferably 10 mol% or more, and for example, 30 mol% or less, preferably 20 mol% or less.

The method for producing the solvent-use blocked isocyanate is not limited to the above-described methods.

For example, the polyisocyanate compound can be allowed to react with the first blocking agent at a ratio at which the isocyanate group in free state remains, and thereafter the blocked isocyanate having the isocyanate group in free state can be allowed to react with the second blocking agent. The polyisocyanate compound can be allowed to react with the first blocking agent and second blocking agent simultaneously as well.

The polyisocyanate compound blocked only with the first blocking agent and the polyisocyanate compound blocked only with the second blocking agent can be separately prepared, and they can be mixed so that the first latent isocyanate group content and the second latent isocyanate group content are in the above-described range. In this case, the solvent-use blocked isocyanate contains the molecule having the first latent isocyanate group and the molecule having the second latent isocyanate group separately.

### <Hydrophilic blocked isocyanate>

Next, description is given below of hydrophilic blocked isocyanate as the second embodiment of the blocked isocyanate of the present invention.

The hydrophilic blocked isocyanate is, for example, water dispersive blocked isocyanate, and for example, it is dispersed in water for use.

In the hydrophilic blocked isocyanate, the above-described solvent-use blocked isocyanate is modified with a hydrophilic compound containing an active hydrogen group (in the following, referred to as active hydrogen group-containing hydrophilic compound). To be more specific, the hydrophilic blocked isocyanate is a reaction product (hydrophilic high molecular weight polyol-modified polyisocyanate) of the polyisocyanate compound modified with the active hydrogen group-containing hydrophilic compound (in the following, referred to as hydrophilic polyisocyanate compound) and the blocking agent (first blocking agent and second blocking agent).

### (5) Hydrophilic polyisocyanate compound

The hydrophilic polyisocyanate compound is a reaction product of the above-described polyisocyanate, the above-described high molecular weight polyol, and active hydrogen group-containing hydrophilic compound.

The active hydrogen group-containing hydrophilic compound is a compound containing both the active hydrogen group and hydrophilic group. Examples of the active hydrogen group-containing hydrophilic compound include the active hydrogen group-containing nonionic hydrophilic compound, active hydrogen group-containing anionic hydrophilic compound (carboxylic acid group-containing active hydrogen compound and sulfonic acid group-containing active hydrogen compound, etc. described in paragraph [0149] to [0157] of Japanese Unexamined Patent Publication No. 2017-82208), and the active hydrogen group-containing cationic hydrophilic compound (for example, quaternary amino group-containing active hydrogen compound, etc.). The active hydrogen group-containing hydrophilic compound can be used singly, or can be used in combination of two or more.

Of these examples of the active hydrogen group-containing hydrophilic compound, preferably, the active hydrogen group-containing nonionic hydrophilic compound and the active hydrogen group-containing anionic hydrophilic compound are used, and further preferably, the active hydrogen group-containing nonionic hydrophilic compound is used.

For the active hydrogen group-containing nonionic hydrophilic compound, for example, a polyoxyethylene compound having at least three continuous ethylene oxide groups (oxyethylene groups) is used.

Examples of the polyoxyethylene compound include polyoxyethylene group-containing polyol, polyoxyethylene group-containing polyamine, one-end-terminated polyoxyethylene glycol, and one-end-terminated polyoxyethylene diamine.

The polyoxyethylene group-containing polyol has a polyoxyethylene group in the molecule and also two or more hydroxyl groups. For the polyoxyethylene group-containing polyol, for example, polyoxyethylene glycol, polyoxyethylenetriol, and a random and/or block copolymer of ethyleneoxide with alkyleneoxides such as propyleneoxide (for example, polyoxypropylene polyoxyethylene copolymer diol or triol, polyoxypropylenepolyoxyethylene blocked polymer diol or triol, Pluronic type polypropylene glycol or triol in which ethylene oxide is addition polymerized at polypropylene glycol terminal, etc.) is used.

For the polyoxyethylene group-containing polyol, further, polyoxyethylene side chain containing polyol having two or more hydroxyl groups at its molecular end and having a polyoxyethylene group at side chain is used.

The polyoxyethylene side chain containing polyol is prepared by, for example, first, allowing diisocyanate (for example, aliphatic diisocyanate monomer such as 1,6-hexamethylene diisocyanate, etc.) to go through urethane-forming reaction with one-end-capped polyoxyethylene glycol to be described later (for example, methoxyethylene glycol, etc.) so that the isocyanate group of diisocyanate is excessive relative to the hydroxyl group of the one-end-capped polyoxyethylene glycol, and then as necessary, removing unreacted diisocyanate to prepare polyoxyethylene chain-containing monoisocyanate, and then allowing polyoxyethylene chain-containing monoisocyanate to go through urea-forming reaction with dialkanolamine (for example, C1 to 20 dialkanolamine such as diethanolamine, etc.).

For the polyoxyethylene group-containing polyamine, for example, polyoxyalkyleneetherdiamine such as polyoxyethyleneetherdiamine is used.

For the one-end-capped polyoxyethylene glycol, for example, alkoxyethylene glycol with its one-end capped with an alkyl group having 1 to 20 carbon atoms (monoalkoxypolyethylene glycol), and to be specific, methoxypolyethylene glycol and ethoxypolyethylene glycol are used.

For the one-end-capped polyoxyethylene diamine, for example, polyoxyethylene diamine having 1 to 20 carbon atoms with its one end capped with an alkoxy group (monoaminomonoalkoxypolyoxyethylene) is used.

The polyoxyethylene compound can be used singly, or can be used in combination of two or more.

For the polyoxyethylene compound, preferably, polyoxyethylene group-containing polyol, and one-end-capped polyoxyethylene glycol are used, further preferably, polyoxyethylene side chain containing polyol and monoalkoxypolyethylene glycol are used, particularly preferably, methoxypolyethylene glycol is used.

Such an active hydrogen group-containing nonionic hydrophilic compound (including polyoxyethylene compound) has a number average molecular weight of, for example, 200 or more, preferably 300 or more, more preferably 400 or more, and for example, 2000 or less, preferably 1500 or less, more preferably 1200 or less.

### (6) Preparation of hydrophilic polyisocyanate compound

Next, description is given below of preparation of the hydrophilic polyisocyanate compound.

To prepare the hydrophilic polyisocyanate compound, the above-described polyisocyanate, the above-described high molecular weight polyol, and the above-described active hydrogen group-containing hydrophilic compound are allowed to react at a rate at which the isocyanate group in free state remains.

The equivalent ratio of a total amount of the hydroxyl group of high molecular weight polyol and active hydrogen group of the active hydrogen group-containing hydrophilic compound relative to the isocyanate group of polyisocyanate ((OH + active hydrogen group)/NCO) is, for example, 0.01 or more, preferably 0.04 or more, and for example, 0.2 or less, preferably 0.08 or less.

The equivalent ratio (OH/NCO) range of the hydroxyl group of high molecular weight polyol relative to the isocyanate group of polyisocyanate is, for example, 0.005 or more, preferably 0.01 or more, and for example, 0.2 or less, preferably 0.03 or less.

The equivalent ratio of the active hydrogen group of the active hydrogen group-containing hydrophilic compound relative to the isocyanate group of polyisocyanate (active hydrogen group/NCO) is, for example, 0.01 or more, preferably 0.03 or more, and for example, 0.2 or less, preferably 0.05 or less.

The mixing ratio of the high molecular weight polyol relative to 100 parts by mass of the polyisocyanate is, for example, 2 parts by mass or more, preferably 5 parts by mass or more, and for example, 30 parts by mass or less, preferably 20 parts by mass or less.

The mixing ratio of the active hydrogen group-containing hydrophilic compound relative to 100 parts by mass of the polyisocyanate is, for example, 2 parts by mass or more, preferably 10 parts by mass or more, and for example, 40 parts by mass or less, preferably 30 parts by mass or less.

The reaction between the polyisocyanate, high molecular weight polyol, and active hydrogen group-containing hydrophilic compound is conducted under the same conditions for the reaction between, for example, the above-described polyisocyanate and high molecular weight polyol in the first embodiment (for example, reaction temperature, reaction pressure, reaction time, presence or absence of organic solvent, etc.).

In the above-described manner, the isocyanate group of the polyisocyanate reacts with the hydroxyl group of high molecular weight polyol, and the isocyanate group of polyisocyanate reacts with the active hydrogen group of the active hydrogen group-containing hydrophilic compound to prepare a hydrophilic polyisocyanate compound.

In the hydrophilic polyisocyanate compound, the average functionality of the isocyanate group is, for example, 2 or more, preferably 2.5 or more, and for example, 4 or less, preferably 3.5 or less.

In the hydrophilic polyisocyanate compound, the isocyanate group content (NCO%) is, for example, 5 mass% or more, preferably 7 mass% or more, and for example, 25 mass% or less, preferably 20 mass% or less.

In the hydrophilic polyisocyanate compound, the polyol unit content derived from the high molecular weight polyol is, for example, 0.1 mass% or more, preferably 1 mass% or more, more preferably 4 mass% or more, particularly preferably 7 mass% or more, and for example, 35 mass% or less, preferably 25 mass% or less.

When the polyol unit content in the hydrophilic polyisocyanate compound is the above-described lower limit or more, solvent resistance of the polyurethane resin can be improved reliably. When the polyol unit content in the hydrophilic polyisocyanate compound is the above-described upper limit or less, shock resistance of the polyurethane resin can be improved reliably.

In the hydrophilic polyisocyanate compound, the hydrophilic unit content derived from the active hydrogen group-containing hydrophilic compound is, for example, 1 mass% or more, preferably 5 mass% or more, and for example, 35 mass% or less, preferably 25 mass% or less.

When the polyoxyethylene compound is used as the active hydrogen group-containing hydrophilic compound, the hydrophilic polyisocyanate compound has an ethylene oxide group content of, for example, 7 mass% or more, preferably 10 mass% or more, and for example, 30 mass% or less, preferably 25 mass% or less, more preferably 20 mass% or less.

When the ethylene oxide group content in the hydrophilic polyisocyanate compound is the above-described lower limit or more, dispersiveness of the hydrophilic blocked isocyanate can be reliably secured. When the ethylene oxide group content in the hydrophilic polyisocyanate compound is the above-described upper limit or less, shock resistance of the polyurethane resin can be improved reliably.

The hydrophilic polyisocyanate compound can be prepared by any method without limitation to the above-described method.

For example, the above-described polyisocyanate compound that is not modified by the active hydrogen group-containing hydrophilic compound is prepared, and then the polyisocyanate compound can be allowed to react with the active hydrogen group-containing hydrophilic compound.

The hydrophilic polyisocyanate compound can be prepared, without limitation to the reaction between one type of polyisocyanate, one type of high molecular weight polyol, and one type of active hydrogen group-containing hydrophilic compound.

The reaction between the polyisocyanate, high molecular weight polyol, and active hydrogen group-containing hydrophilic compound can be, for example, reaction between two or more types of polyisocyanate, one type of high molecular weight polyol, and one type of active hydrogen group-containing hydrophilic compound; reaction between one type of polyisocyanate, two or more types of high molecular weight polyol, and one type of active hydrogen group-containing hydrophilic compound; reaction between one type of polyisocyanate, one type of high molecular weight polyol, and two or more types of active hydrogen group-containing hydrophilic compound; reaction between two or more types of polyisocyanate, two or more types of high molecular weight polyol, and one type of active hydrogen group-containing hydrophilic compound; reaction between two or more types of polyisocyanate, one type of high molecular weight polyol, and two or more types of active hydrogen group-containing hydrophilic compound; reaction between one type of polyisocyanate, two or more types of high molecular weight polyol, and two or more types of active hydrogen group-containing hydrophilic compound; reaction between two or more types of polyisocyanate, two or more types of high molecular weight polyol, and two or more types of active hydrogen group-containing hydrophilic compound. The hydrophilic polyisocyanate compound can be prepare by these reactions.

Furthermore, a hydrophilic polyisocyanate compound that is not modified with a high molecular weight polyol can be mixed to the hydrophilic polyisocyanate compound.

### (7) Production of hydrophilic blocked isocyanate

The hydrophilic blocked isocyanate is produced in the same manner as in the first embodiment, except that the polyisocyanate compound not modified with the active hydrogen group-containing hydrophilic compound is changed to a hydrophilic polyisocyanate compound. That is, the hydrophilic blocked isocyanate is produced by allowing the above-described hydrophilic polyisocyanate compound, the above-described first blocking agent, and a second blocking agent to react. Therefore, description for the method for producing hydrophilic blocked isocyanate is omitted.

In the hydrophilic blocked isocyanate, the isocyanate group of the hydrophilic polyisocyanate compound is blocked with the first blocking agent and second blocking agent.

The hydrophilic blocked isocyanate has, for example, a first latent isocyanate group in which the isocyanate group is blocked with a first blocking agent and a second latent isocyanate group in which the isocyanate group is blocked with a second blocking agent in 1 molecule.

The hydrophilic blocked isocyanate has a first latent isocyanate group content and a second latent isocyanate group content in the range of the above-described first latent isocyanate group content and the second latent isocyanate group content of the solvent-use blocked isocyanate.

When the first latent isocyanate group content and the second latent isocyanate group content are in the above-described range, low temperature curing properties and pot life of the polyurethane resin composition (described later) can be improved in the hydrophilic blocked isocyanate as well.

When two types of the second blocking agent are used in combination as described above, the main second latent isocyanate group content and the sub second latent isocyanate group content in the hydrophilic blocked isocyanate are in the range of the main second latent isocyanate group content and the sub second latent isocyanate group content in the solvent-use blocked isocyanate.

The method for producing the hydrophilic blocked isocyanate is not limited to the above-described method.

For example, the following can be also possible: the polyisocyanate compound that is not modified with the active hydrogen group-containing hydrophilic compound, first blocking agent, and second blocking agent are allowed to react to prepare blocked isocyanate including unreacted isocyanate group, and then the blocked isocyanate is allowed to react with the active hydrogen group-containing hydrophilic compound to prepare hydrophilic blocked isocyanate.

In view of decomposition of the blocking agent, side reaction, and water dispersiveness of the blocked isocyanate, as described above, it is preferable to prepare the hydrophilic polyisocyanate compound, and then the hydrophilic polyisocyanate compound is allowed to react with the first blocking agent and second blocking agent.

### <Operations and effects>

In the above-described blocked isocyanate (solvent-use blocked isocyanate and hydrophilic blocked isocyanate), the polyisocyanate compound before being blocked with the blocking agent (hydrophilic polyisocyanate compound) is a reaction product of a high molecular weight polyol and polyisocyanate, and is modified with the high molecular weight polyol.

Then, the polyisocyanate compound (hydrophilic polyisocyanate compound) is blocked with the above-described first blocking agent represented by general formula (1), and the second blocking agent, and therefore solvent resistance, bend resistance(excellent adherence), and shock resistance (excellent fastness to rubbing) can be given with good balance to the polyurethane resin produced by using the blocked isocyanate.

The high molecular weight polyol is preferably at least one polyol selected from the group consisting of polycarbonatepolyol, polyesterpolyol, and polytetramethylene ether glycol.

When the polyol is selected from the above-described group of high molecular weight polyol, solvent resistance, bend resistance, and shock resistance can be given with good balance reliably to polyurethane resin produced by using blocked isocyanate.

The polyisocyanate preferably consists of aliphatic polyisocyanate, and further preferably, consists of an aliphatic polyisocyanate derivative.

When the polyisocyanate consists of aliphatic polyisocyanate, bend resistance and shock resistance of the polyurethane resin produced by using blocked isocyanate can be improved reliably.

The second blocking agent preferably contains two blocking agents selected from the group consisting of an imidazole compound, alcohol compound, phenol compound, active methylene compound, amine compound, imine compound, oxime compound, carbamic acid compound, urea compound, acid amide compound, acid imide compound, triazole compound, pyrazole compound, mercaptan compound, bisulfite, imidazoline compound, and pyrimidine compound.

When the second blocking agent contains two types of blocking agent selected from the above-described group, solvent resistance, bend resistance, and shock resistance can be given with good balance to the polyurethane resin produced by using blocked isocyanate even more.

The blocked isocyanate can be modified with a hydrophilic compound containing an active hydrogen group.

In this manner, the blocked isocyanate can be prepared by hydrophilic blocked isocyanate, which is used by dispersing it in water.

### <Polyurethane resin>

The above-described blocked isocyanate (solvent-use blocked isocyanate and hydrophilic blocked isocyanate) can be used, for example, as a known resin material such as polyurethane resin material, polyolefin resin material, polyacryl resin material, and polyester resin material, and preferably, used as a polyurethane resin material.

Examples of the polyurethane resin material include, to be more specific, a two-component polyurethane resin material and one-component polyurethane resin material.

The two-component polyurethane resin material contains component A, as an isocyanate component containing the above-described blocked isocyanate, and component B, as the polyol component containing the above-described low molecular-weight polyol and/or the above-described high molecular weight polyol. With the two-component polyurethane resin material, separately prepared component A (curing agent) and component B (main component) are blended immediately before use.

The one-component polyurethane resin material is a composition, in which the isocyanate component (curing agent) containing the above-described blocked isocyanate and the polyol component (main component) containing the above-described low molecular-weight polyol and/or the above-described high molecular weight polyol are blended in advance.

Of the polyol (low molecular-weight polyol and high molecular weight polyol) contained in the polyol component, preferably, a high molecular weight polyol is used, further preferably, acrylic polyol is used.

In view of dispersiveness of the blocked polyisocyanate, preferably, the polyol component contains monol in addition to polyol.

Examples of the monol include the monol compound described in paragraph [0230] of Japanese Unexamined Patent Publication No. 2017-82208 (to be specific, methanol, ethanol, t-butanol, etc.). The monol can be used singly, or can be used in combination of two or more.

The monol is blended in an amount of, relative to a total amount of polyurethane resin material, for example, 1 mass% or more, preferably 2 mass% or more, and for example, 10 mass% or less, preferably 8 mass% or less.

The polyol (as necessary, including monol compound. The same applies to the following.) can be bulk (solid content concentration 100 mass%), but for example, it can be dissolved or dispersed in water or the above-described organic solvent. Also, for example, it can be prepared by using the polymerization method with which the above-described polyol is produced in a state in which it is dispersed in water, such as emulsion polymerization and suspension polymerization. Furthermore, the above-described polyol can be dispersed non-aqueously, or plastisol can also be used. Plastisol contains, for example, resin (for example, vinyl chloride resin, vinyl acetate copolymer vinyl chloride resin, acrylic resin, etc.), the above-described plasticizer, and filler.

When polyol is dissolved or dispersed in water or an organic solvent, the solid content concentration is, for example, 1 mass% or more, preferably 5 mass% or more, more preferably 10 mass% or more.

In the polyurethane resin material, the isocyanate component (curing agent) and the polyol component (main component) are blended in advance or in use, to prepare the polyurethane resin composition, and the blocking agent (first blocking agent and second blocking agent) is dissociated from the blocked isocyanate.

In blending the isocyanate component (curing agent) and polyol component (main component), for example, the blocked isocyanate is dispersed or dissolved in water or an organic solvent to prepare a dispersion liquid or solution, and thereafter blended with bulk (solid content concentration 100 mass%) polyol or polyol dispersion liquid or solution. The blocked isocyanate can be directly dispersed in a dispersion liquid or solution of polyol.

The isocyanate component (curing agent) and the polyol component (main component) are blended in an amount so that the equivalent ratio (isocyanate group/hydroxyl group) of the latent isocyanate group (isocyanate group blocked with blocking agent) of the blocked isocyanate relative to the hydroxyl group of polyol is, for example, 0.05 or more, preferably 0.1 or more, more preferably 0.2 or more, and for example, 5 or less, preferably 3 or less, more preferably 2 or less.

The conditions for dissociation are not particularly limited, as long as the blocking agent (first blocking agent and second blocking agent) in the blocked isocyanate dissociate. The dissociation temperature (that is, curing temperature of polyurethane resin composition) is, for example, 60°C or more, preferably 80°C or more, and for example, less than 150°C, preferably less than 130°C.

Then, the blocking agent in the blocked isocyanate is allowed to dissociate, and the regenerated isocyanate group in the blocked isocyanate is allowed to react with the hydroxyl group of the polyol to cure the polyurethane resin composition to produce polyurethane resin.

At this time, the first blocking agent (including the first blocking agent blocking the isocyanate group, and the dissociated first blocking agent) having higher catalyst activity that activates the isocyanate group works as a catalyst to active the isocyanate group. Therefore, when the first blocking agent is used, compared with the case where only the second blocking agent is used, the polyurethane resin composition can be cured efficiently.

That is, the dissociation temperature of the first blocking agent and second blocking agent when the first latent isocyanate group and second latent isocyanate group are both contained is lower than the dissociation temperature of the second blocking agent when the first latent isocyanate group is not present and only the second latent isocyanate group is present.

In other words, the curing temperature A (°C) of the polyurethane resin composition in which the blocked isocyanate of a reaction product of the polyisocyanate compound (hydrophilic polyisocyanate compound) and the first blocking agent and second blocking agent is used is lower than the curing temperature B (°C) of the polyurethane resin composition in which the blocked isocyanate of a reaction product of the polyisocyanate compound (hydrophilic polyisocyanate compound) and the second blocking agent is used.

That is, because the first blocking agent has a higher catalyst activity than that of the second blocking agent, the curing temperature A (°C) of the polyurethane resin composition using the blocked isocyanate of a reaction product of the first and second blocking agents is lower than the curing temperature B (°C) of the polyurethane resin composition produced in the same manner except that only the second blocking agent is used without using the first blocking agent. The difference (°C) between the curing temperature B (°C) and the curing temperature A (°C) converted into a value corresponding 1 mol of the first blocking agent (°C/mol) is regarded as catalyst activity of the first blocking agent.

The reaction time under heating conditions of the regenerated isocyanate group of the blocked isocyanate and the hydroxyl group of polyol is, for example, 1 minute or more, preferably 10 minutes or more, and for example, 60 minutes or less, preferably 30 minutes or less.

As necessary, to one or both of the isocyanate component (curing agent) and the polyol compound (main component), for example, additives such as the following can be added suitably; a reaction solvent, catalyst, epoxy resin, coating improving agents, leveling agent, antifoaming agent, stabilizers such as antioxidant and ultraviolet absorber, thickening agent, antisagging agent, plasticizer, surfactant, pigment, filler, organic or inorganic fine particles, and antifungal agent. The amount of the additive added is determined suitably according to its purpose and use.

When the blocked isocyanate is used as a curing agent, it can be used in combination with a known curing agent such as melamine and epoxy. In such a case, the mixing ratio of the curing agent is set suitably in accordance with the purpose and application.

Such a polyurethane resin material can be used for, for example, a coating material, adhesive, fiber, leather, waterproofing agent, binder, and foam, and preferably, for a coating material and adhesive.

That is, the polyurethane resin material is suitably used for a polyurethane coating material and polyurethane adhesive material, and the blocked isocyanate is suitably used for a coating-use blocked isocyanate and an adhesive-use blocked isocyanate.

The polyurethane coating material and polyurethane adhesive material are blended in advance or at use to prepare a polyurethane resin composition, and then applied to an object by a known application method (for example, spraying, dip coating, spin coating, rotary atomization coating, curtain coating, etc.), and then dried to form coating.

Furthermore, as necessary, electrostatic application can be performed, and furthermore, baking can be performed after application. The baking method is not limited, and for example, a known method such as infrared heating, hot air heating, and high-frequency heating are used.

Examples of the object include the object described in paragraph [0255] of Japanese Unexamined Patent Publication No. 2017-82208 (to be specific, organic-inorganic composite such as fiber reinforced plastic (FRP), resin reinforced concrete, resin reinforced concrete, etc.).

The surface of above-described object can be treated (for example, phosphate treatment, chromate treatment, composite oxide treatment, etc.). For example, coating such as base coating with electrodeposition coating material or intermediate coating can be formed. Furthermore, the plastic can be pretreated (e.g., degreasing, washing with water, primer treatment, etc.).

The above-described polyurethane coating material and polyurethane adhesive material can be used for industrial materials generally (articles described in paragraph [0257] of Japanese Unexamined Patent Publication No. 2017-82208, etc.).

### Examples

The present invention is further described in detail based on EXAMPLES below. However, the present invention is not limited to Examples. The specific numerical values in blending ratio (content ratio), property value, and parameter used in the following description can be replaced with upper limit values (numerical values defined with "or less" or "below") or lower limit values (numerical values defined with "or more" or "above") of corresponding numerical values in blending ratio (content ratio), property value, and parameter described in the above-described "DESCRIPTION OF EMBODIMENTS". The "parts" and "%" are based on mass unless otherwise specified. The parts and "%" are based on mass unless otherwise specified in the following.

### <Preparation of solvent-use blocked isocyanate>

### 1. Examples 1 to 20 and Comparative Examples 1 to 4

At room temperature (25°C), in a 2L-reactor equipped with a mixer, thermometer, condenser, and nitrogen gas inlet tube, the polyisocyanate and high molecular weight polyol shown in Table 1 to Table 5 were added to 79 parts by mass of diethylene glycolethylmethylether (organic solvent) to achieve the formulation shown in Table 1 to Table 5, and the mixture was subjected to urethane-forming reaction at 90°C until the amount of the remaining isocyanate is unchanged, thereby preparing a polyisocyanate compound. In Comparative Example 1, the high molecular weight polyol was not added and polyisocyanate was used as is.

The ratio of the high molecular weight polyol added is calculated based on formula (1) below. The ratio of the high molecular weight polyol added (%)= high molecular weight polyol (parts by mass)/[polyisocyanate (parts by mass) + high molecular weight polyol (parts by mass)]×100 · · · (1)

Then, the second blocking agent shown in Table 1 to Table 5 was added to the reaction solution dividedly several times to achieve the formulation shown in Table 1 to Table 5 while adjusting the temperature of the reaction solution to not exceed 50°C. In Comparative Example 2, the second blocking agent was not added.

Then, the first blocking agent (1,1,3,3-tetramethylguanidine) was added dividedly several times to the reaction solution to achieve the formulation shown in Table 1 to Table 5. Thereafter, the reaction solution was stirred at room temperature (25°C) for 3 hours. In Comparative Examples 3 and 4, the first blocking agent was not added.

Thereafter, FT-IR spectrum was measured to confirm that the isocyanate was blocked, thereby producing a solvent-use blocked isocyanate. The solvent-use blocked isocyanate had a solid content concentration of 65 mass%.

### 2. Examples 21 and 22

The solvent-use blocked isocyanate of Example 1 was mixed with the solvent-use blocked isocyanate of Comparative Example 1 to achieve the mixing ratio shown in Table 4, thereby producing a solvent-use blocked isocyanate.

### <Preparation of solvent-based one-component polyurethane resin material>

A polyol component (solution) in which acrylic polyol (trade name: Q182, manufactured by Mitsui Chemicals, Inc.) and t-butanol (monol) were dissolved in diethylene glycolethylmethylether (organic solvent) was prepared. The concentration of the polyol component was adjusted so that the final solvent-based one-component polyurethane resin material had a solid content concentration of 40 mass% and a t-butanol (monol) concentration of 5 mass%.

Then, the solvent-use blocked isocyanate produced in Examples and Comparative Examples was added so that the molar ratio of the hydroxyl group of acrylic polyol and the latent isocyanate group of the solvent-use blocked isocyanate was 1, and the mixture was stirred for 30 minutes, thereby producing a solvent-based one-component polyurethane resin material.

### <Preparation of hydrophilic blocked isocyanate>

### 1. Examples 23 to 44 and Comparative Examples 5 to 8

At room temperature (25°C), in a 2L-reactor equipped with a mixer, thermometer, condenser, and nitrogen gas inlet tube, the polyisocyanate, high molecular weight polyol, and hydrophilic compound shown in Table 6 to Table 10 were added to 89 parts by mass of diethylene glycolethyl methylether (organic solvent) to achieve the formulation shown in Table 6 to Table 10, and the mixture was subjected to urethane-forming reaction at 90°C until the remaining isocyanate amount did not change, thereby preparing a hydrophilic polyisocyanate compound. In Comparative Example 5, the polyisocyanate was allowed to react with the hydrophilic compound without adding the high molecular weight polyol, thereby preparing a hydrophilic polyisocyanate compound.

Then, the second blocking agent shown in Table 6 to Table 10 was added dividedly several times to the reaction solution to achieve the formulation shown in Table 6 to Table 10, while adjusting the temperature of the reaction solution not to exceed 50°C. In Comparative Example 6, the second blocking agent was not added.

Then, the first blocking agent (1,1,3,3-tetramethylguanidine) was added dividedly several times to the reaction solution to achieve the formulation shown in Table 6 to Table 10. Thereafter, the reaction solution was stirred at room temperature (25°C) for 3 hours. In Comparative Examples 7 and 8, the first blocking agent was not added.

Thereafter, FT-IR spectrum was measured to confirm that the isocyanate was blocked, thereby producing a hydrophilic blocked isocyanate. The hydrophilic blocked isocyanate had a solid content concentration of 65 mass%.

### 2. Examples 45 and 46

The hydrophilic blocked isocyanate of Examples 23 and the hydrophilic blocked isocyanate of Comparative Example 5 were blended to achieve the mixing ratio shown in Table 9, thereby producing a hydrophilic blocked isocyanate.

### <Preparation of hydrophilic one-component polyurethane resin material>

A polyol component (dispersion liquid) in which acrylic polyol (trade name: RE4788, manufactured by Mitsui Chemicals, Inc.) was dispersed in water was prepared. The concentration of the polyol component was adjusted so that the final hydrophilic one-component polyurethane resin material had a solid content concentration of 30 mass%.

Then, the hydrophilic blocked isocyanate produced in Examples and Comparative Examples was added so that the molar ratio of the hydroxyl group of the acrylic polyol and the latent isocyanate group of the hydrophilic blocked isocyanate was 1, and the mixture was stirred for 30 minutes, thereby producing a hydrophilic one-component polyurethane resin material.

### <Evaluation>

### 1. Solvent resistance of coating

The solvent-based one-component polyurethane resin material and hydrophilic one-component polyurethane resin material prepared as described above were applied on a tin substrate with a 100 µm applicator, and it was cured at 120°C for 30 minutes.

Then, the cured coating was rubbed with gauze immersed in ethyl acetate 50 times, and the coating was observed. The coating that had no damage was evaluated as Good, partly peeled was regarded as Fair, and completely peeled was evaluated as Bad. The results are shown in Tables 1 to 10.

### 2. Erichsen test (bend resistance of coating)

The solvent-based one-component polyurethane resin material and hydrophilic one-component polyurethane resin material prepared as described above were applied on a steel plate with a 100 µm applicator, and the coating was cured at 120°C for 30 minutes. In accordance with JIS K 5600-5-2 (1999), a 20 mm diameter drawing punch was applied on a side of the steel plate opposite to the side where coating was applied, and while firmly fixing the steel plate, the drawing punch was pressed against the coating surface at a predetermined speed, and the pushed length (mm) at which cracks and peelings were caused on the coating surface were evaluated. The results are shown in Tables 1 to 10.

### 3. Impact test of coating

The solvent-based one-component polyurethane resin material and hydrophilic one-component polyurethane resin material prepared as described above were applied on a steel plate with a 100 µm applicator, and cured at 120°C for 30 minutes. The steel plate on which the coating was formed was sandwiched between the 1/2 inch impact head and receive block of a Dupont impact tester, and using a load (500g), impact was applied to the face (surface) where the coating was formed on the steel plate. The height (cm) of the load was measured when damages occur on the coating. The results are shown in Tables 1 to 10.

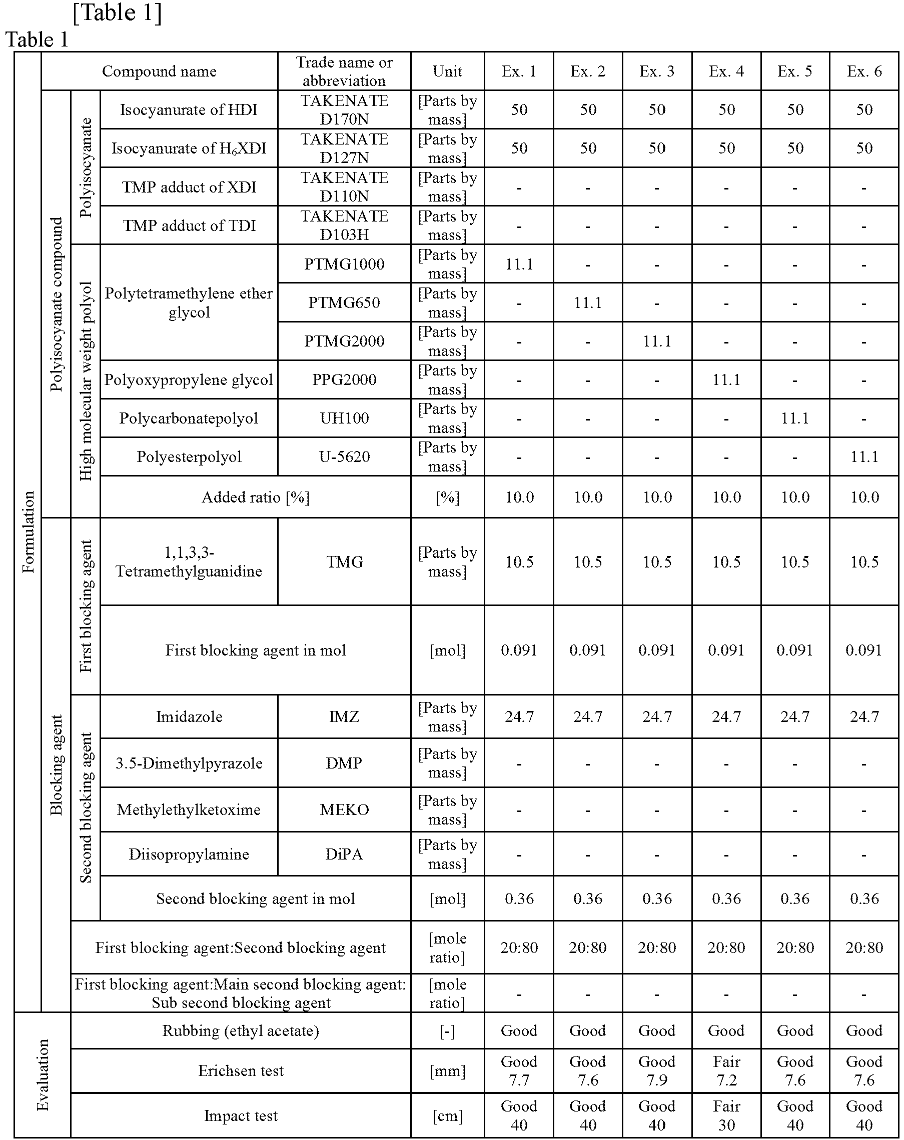

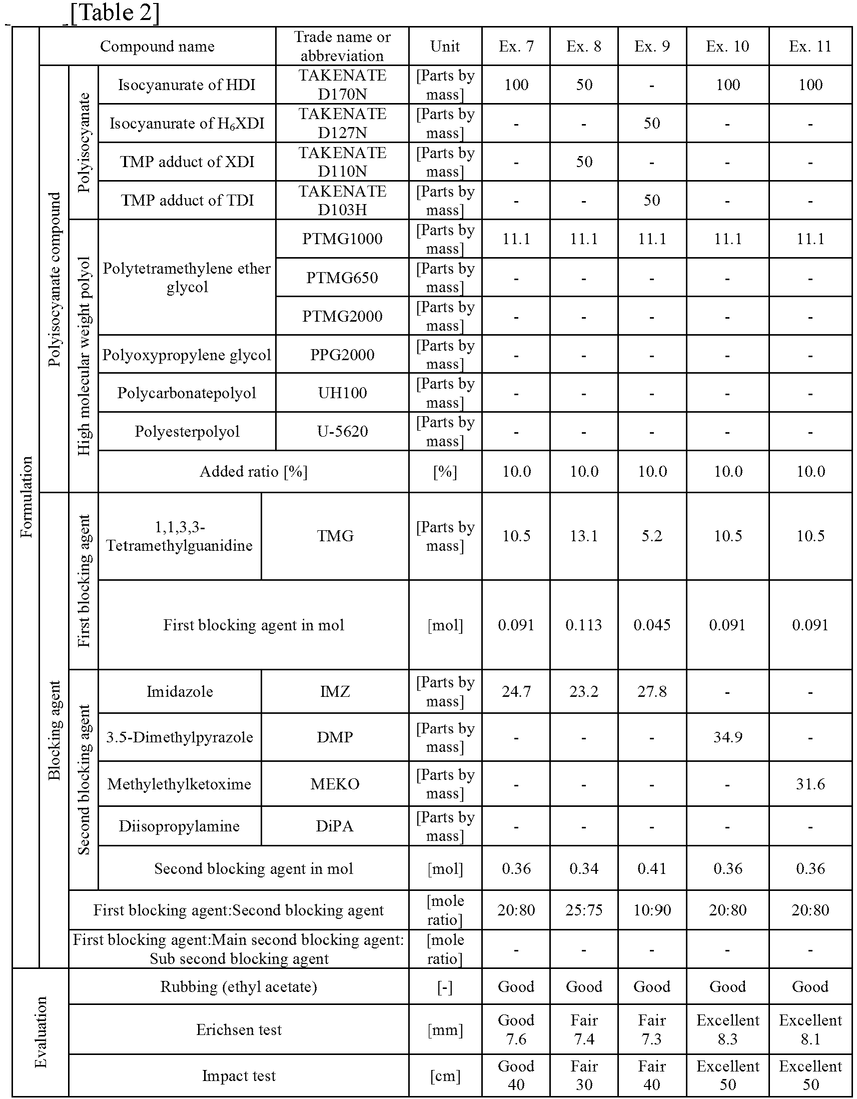

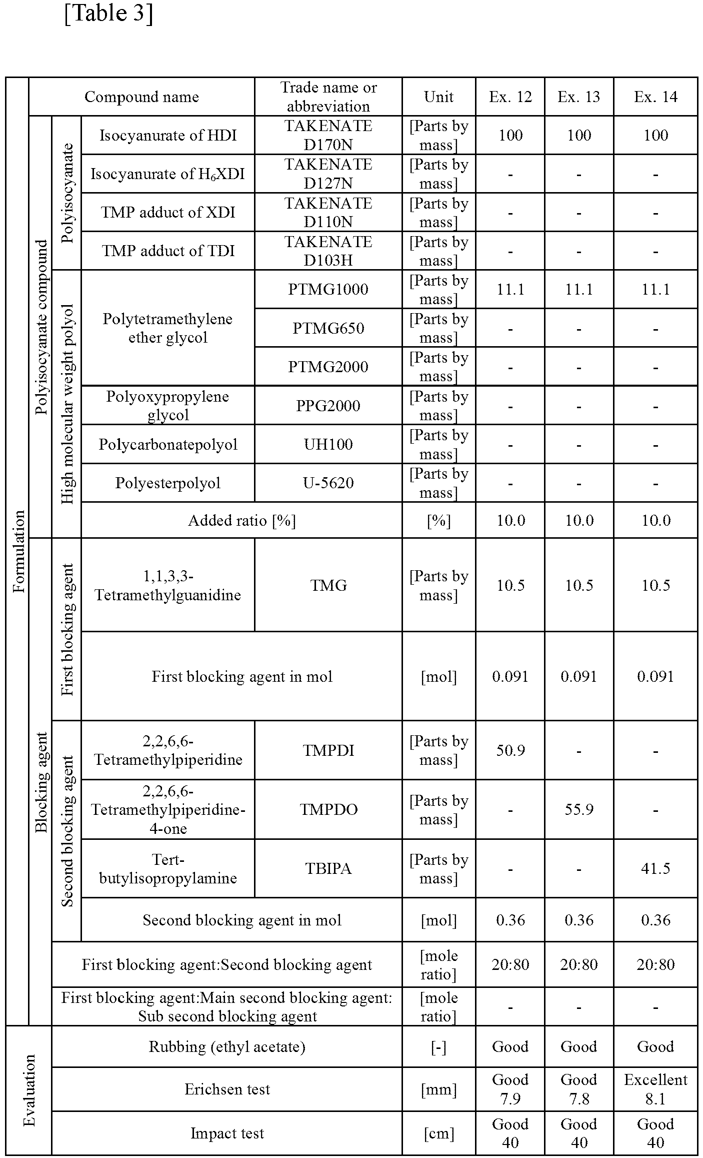

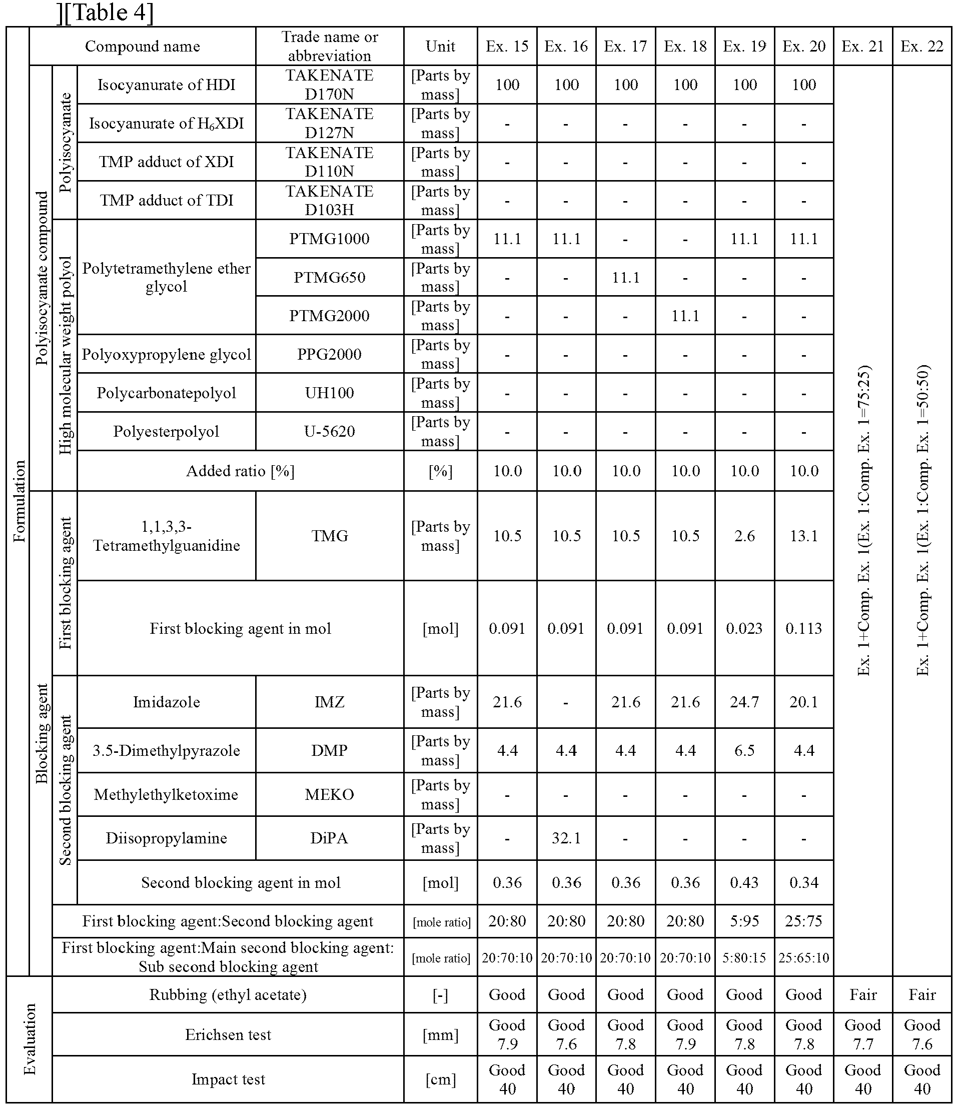

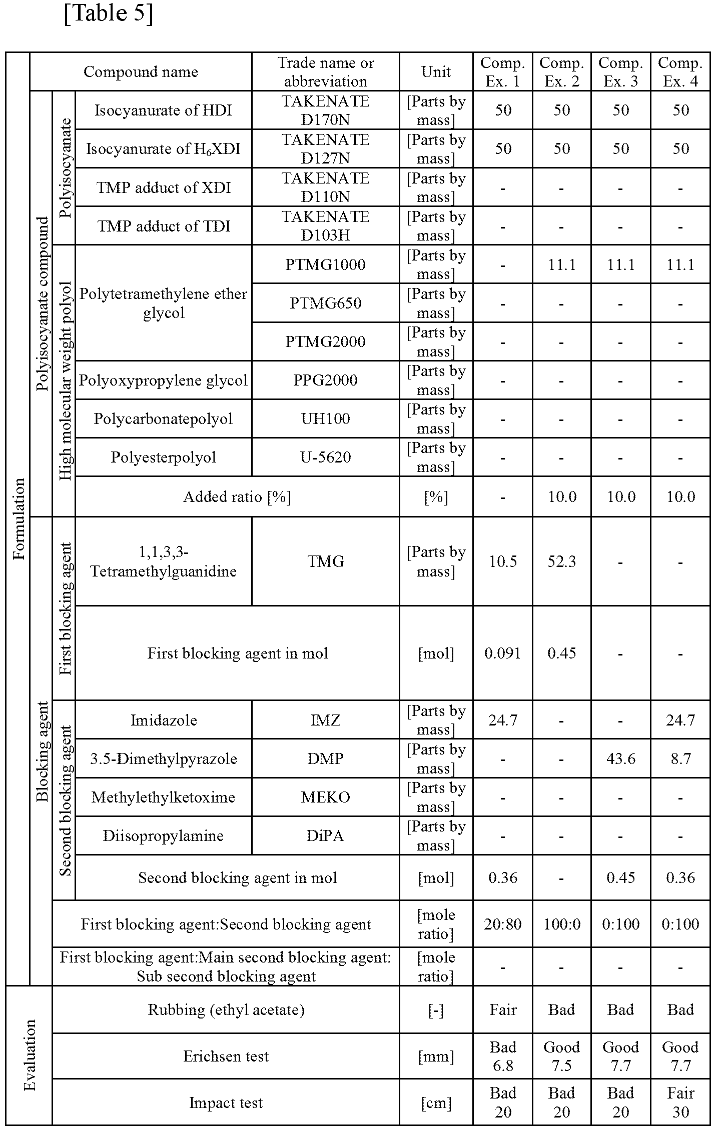

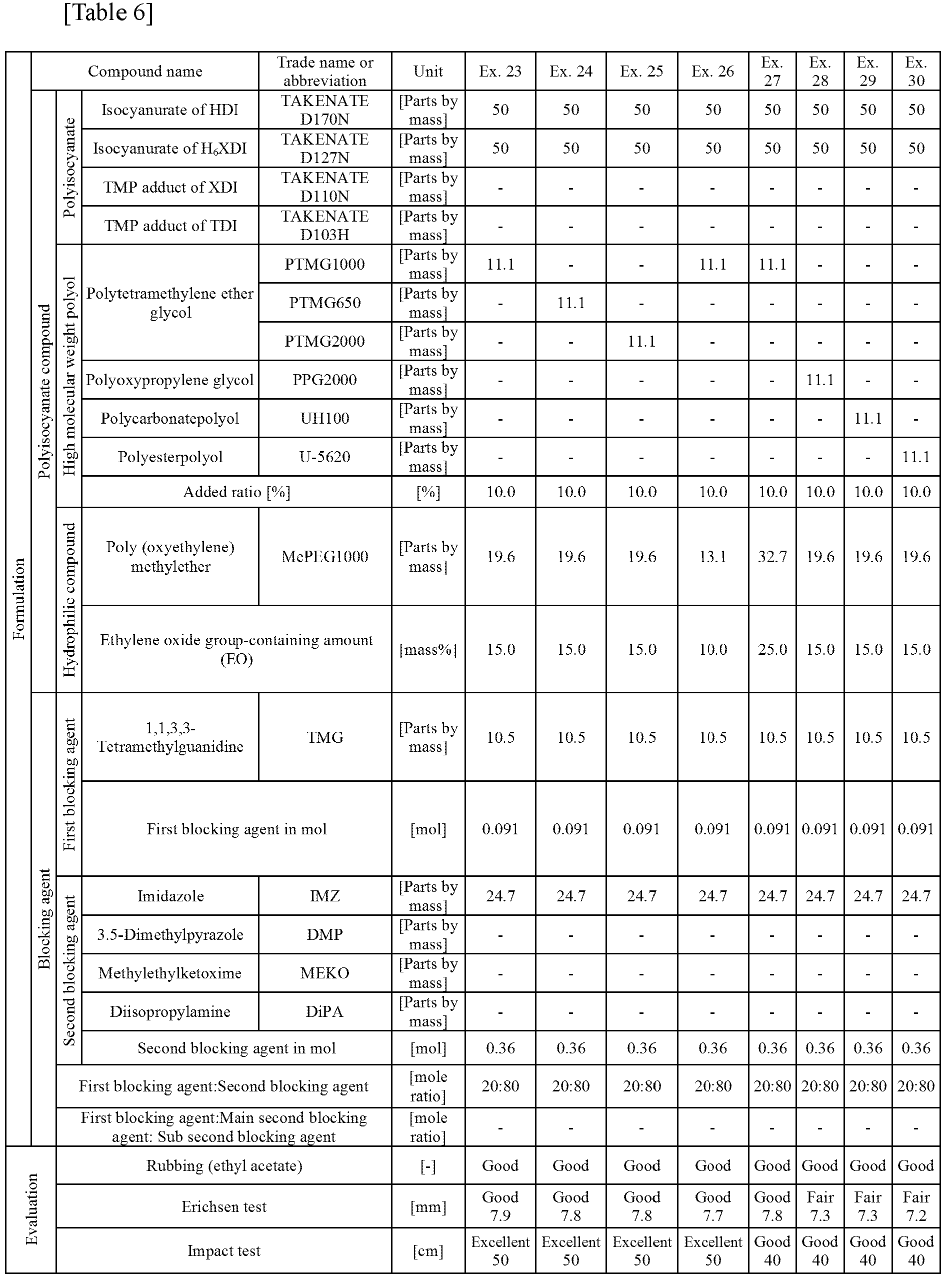

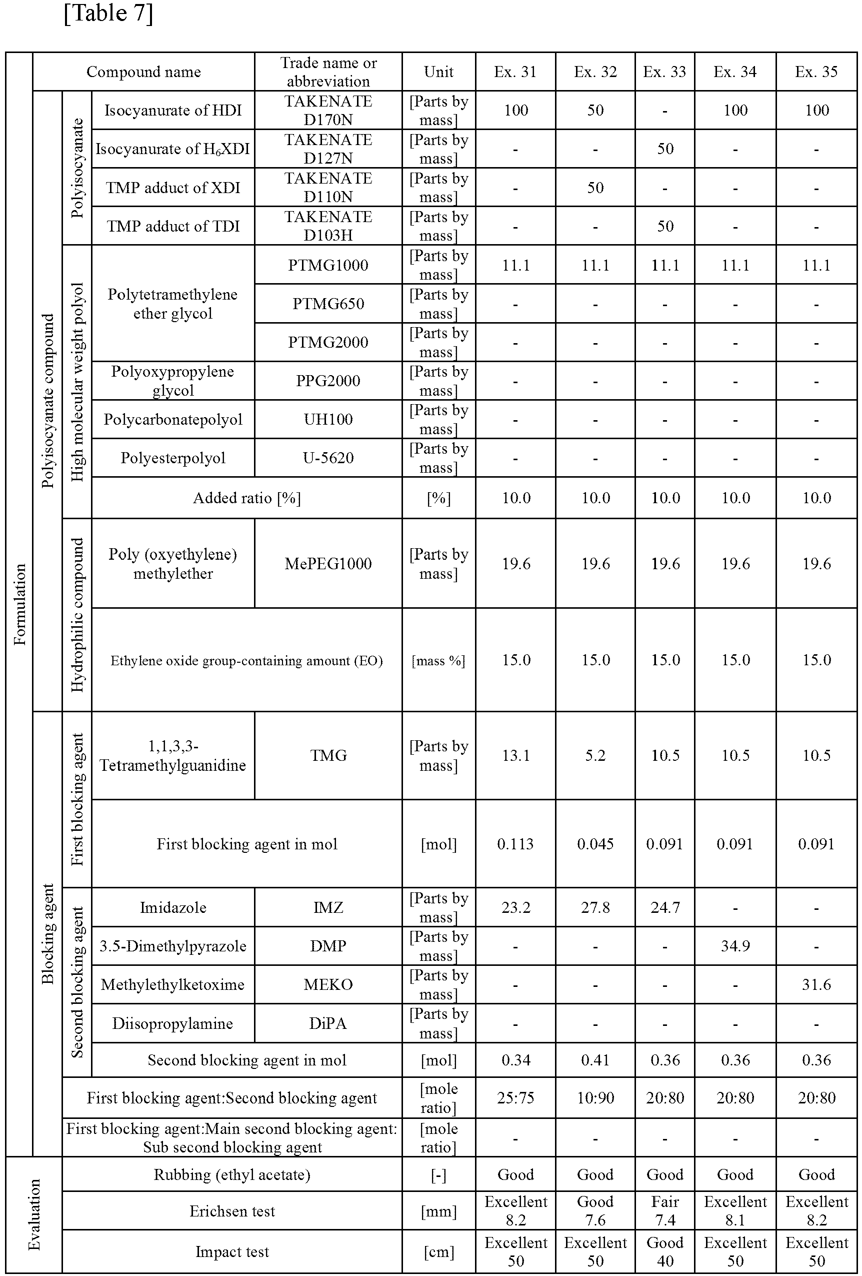

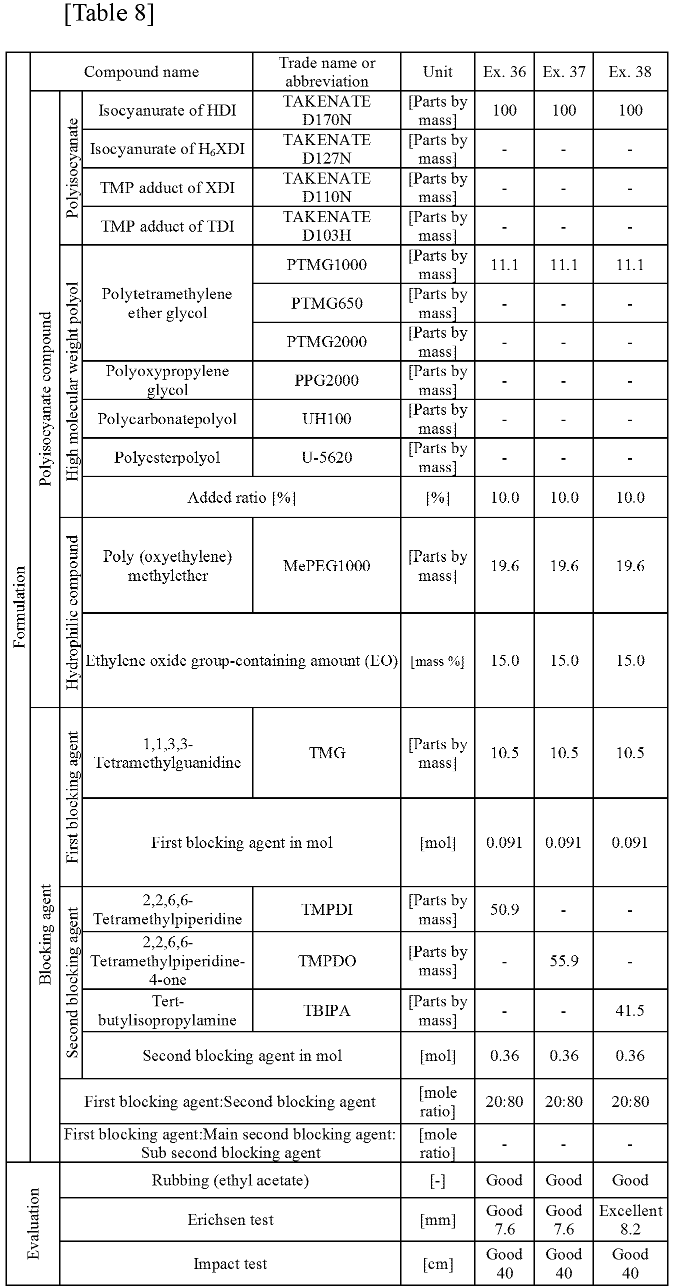

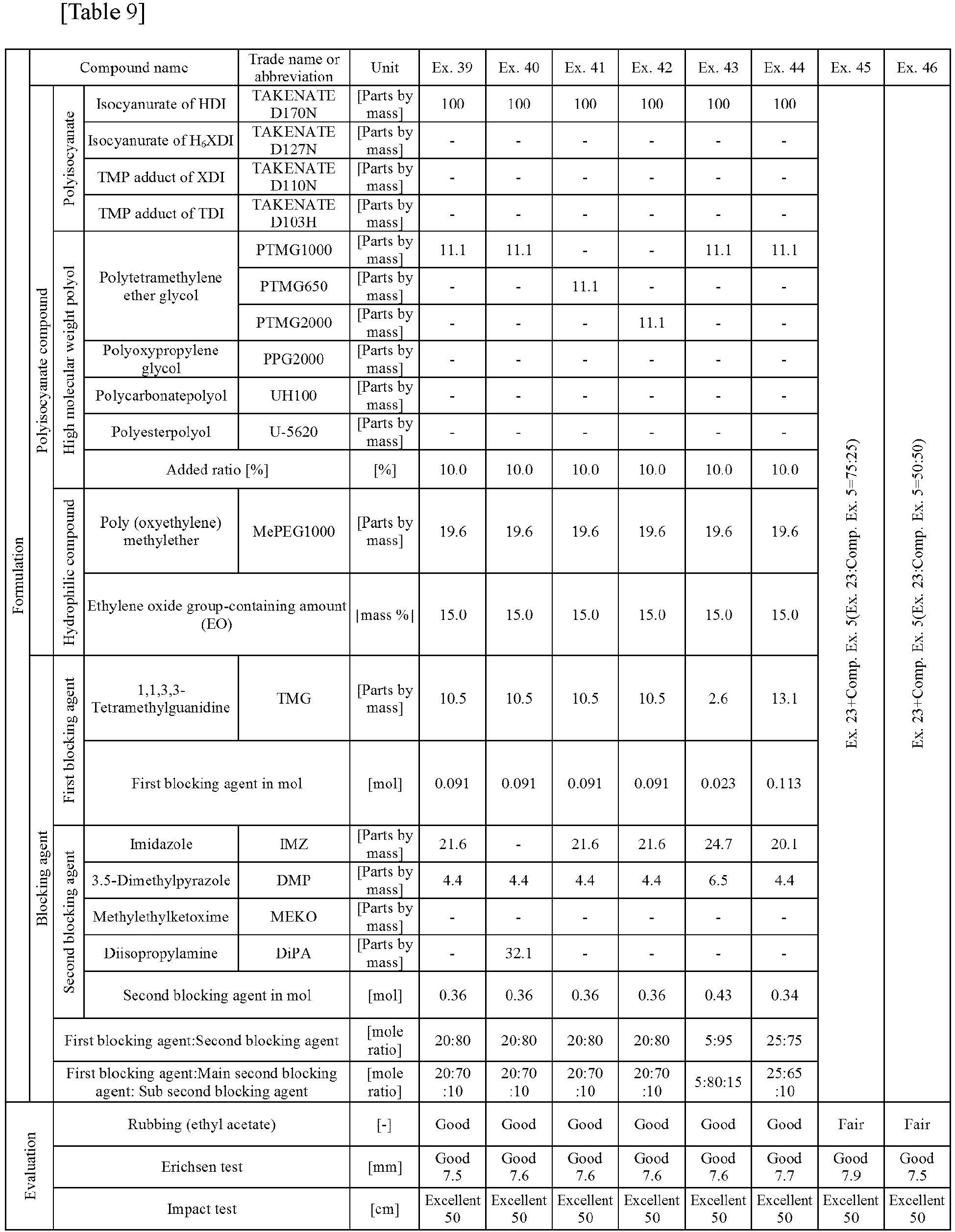

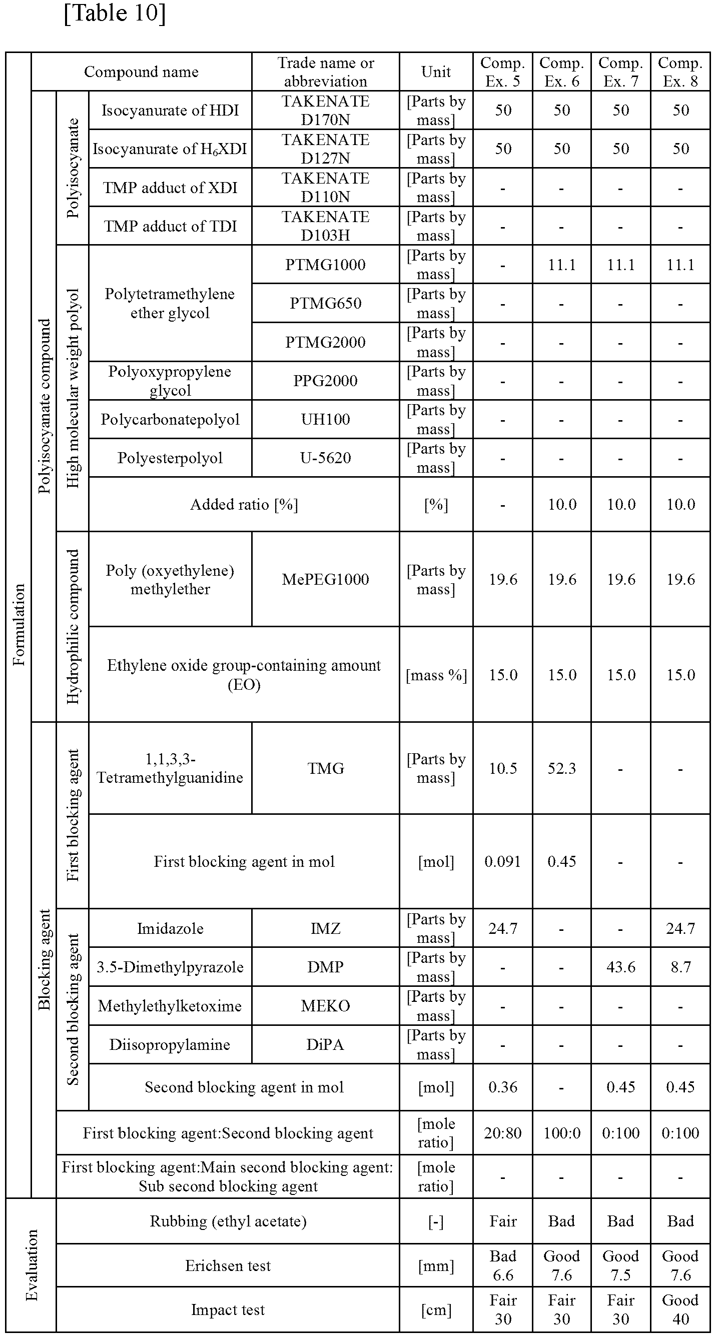

The abbreviations in Tables are shown below.

TAKENATE D170N: hexamethylene diisocyanate trimers (isocyanurate-modified product of HDI), isocyanate group content 20.7 mass%, manufactured by Mitsui Chemicals, Inc.,
TAKENATE D127N: bis(isocyanatomethyl) cyclohexane trimers (isocyanurate-modified product of H₆XDI), isocyanate group content 13.5 mass%, manufactured by Mitsui Chemicals, Inc.,
TAKENATE D110N: xylylenediisocyanate trimethylrollpropane adduct (polyol-modified product, TMP adduct of XDI), isocyanate group content 11.5 mass%, manufactured by Mitsui Chemicals, Inc.,
TAKENATE D103H: tolylene diisocyanate trimethylrollpropane adduct (polyol-modified product, TMP adduct of TDI), isocyanate group content 13.0 mass%, manufactured by Mitsui Chemicals, Inc.,
PTMG1000: polytetramethylene ether glycol, number average molecular weight 1000, manufactured by Mitsubishi Chemical Holdings,
PTMG650: polytetramethylene ether glycol, number average molecular weight 650, manufactured by Mitsubishi Chemical Holdings,
PTMG2000: polytetramethylene ether glycol, number average molecular weight 2000, manufactured by Mitsubishi Chemical Holdings,
PPG2000: polyoxypropylene glycol, number average molecular weight 2000, manufactured by Wako Pure Chemical Industries, Ltd.,
UH-100: polycarbonatediol of a reaction product of 1,6-hexanediol and dimethyl carbonate, number average molecular weight 1000, manufactured by Ube Industries, Ltd.,
U-5620: TAKELAC U-5620, adipate polyesterpolyol, number average molecular weight 2000, manufactured by Mitsui Chemicals, Inc.,
TMG: 1,1,3,3-tetramethylguanidine,
IMZ: imidazole, manufactured by Nippon Gohsei Co., Ltd.,
DMP: 3,5-dimethylpyrazole,
MEKO: methylethyl ketone oxime, manufactured by Tokyo Chemical Industry Co., Ltd.,
DiPA: diisopropylamine, manufactured by Tokyo Chemical Industry Co., Ltd.,
TMPDI: 2,2,6,6-tetramethylpiperidine, manufactured by Tokyo Chemical Industry Co., Ltd.,
TMPDO: 2,2,6,6-tetramethylpiperidine-4-one, manufactured by Tokyo Chemical Industry Co., Ltd.,
TBIPA: N-tert-butylisopropylamine, manufactured by Aldrich,
MePEG1000: methoxyPEG#1000, poly (oxyethylene) methylether, number average molecular weight 1000, manufactured by TOHO Chemical Industry Co., Ltd.

### Industrial Applicability

The blocked isocyanate of the present invention is suitably used for, for example, a polyurethane resin material used for various industrial products. To be more specific, it is suitably used for a polyurethane resin material for a coating material, adhesive, fiber, leather, waterproofing material, binder, and foam.

## Claims

1. A blocked isocyanate in which a polyisocyanate compound is blocked with a blocking agent, wherein
the blocked isocyanate contains a first latent isocyanate group in which an isocyanate group is blocked with a first blocking agent, and a second latent isocyanate group in which an isocyanate group is blocked with a second blocking agent,
the first blocking agent is represented by general formula (1) below and has a higher catalyst activity that activates the isocyanate group than that of the second blocking agent, and
the polyisocyanate compound is a reaction product of a high molecular weight polyol having a number average molecular weight of 250 or more and polyisocyanate, and
the high molecular weight polyol having a number average molecular weight of 250 or more is at least one polyol selected from the group consisting of polycarbonatepolyol, polyesterpolyol, and polytetramethylene ether glycol: 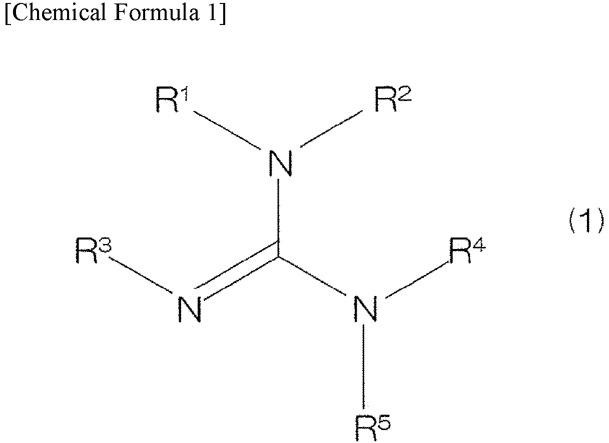 (in the formula, R¹ to R³ represent a hydrocarbon group having 1 to 12 carbon atoms or a hydrogen atom and at least one of R¹ to R³ represents a hydrogen atom, and R¹ and R³ are optionally bonded to each other to form a heterocycle; R⁴ and R⁵ represent a hydrocarbon group having 1 to 12 carbon atoms, R⁴ and R¹ are optionally bonded to each other to form a heterocycle, and R⁵ and R³ are optionally bonded to each other to form a heterocycle).

2. The blocked isocyanate according to Claim 1, wherein the polyisocyanate consists of aliphatic polyisocyanate.

3. The blocked isocyanate according to Claim 1, wherein
the second blocking agent contains two types of blocking agents selected from the group consisting of
an imidazole compound, alcohol compound, phenol compound, active methylene compound, amine compound, imine compound, oxime compound, carbamic acid compound, urea compound, acid amide compound, acid imide compound, triazole compound, pyrazole compound, mercaptan compound, bisulfite, imidazoline compound, and pyrimidine compound.

4. The blocked isocyanate according to Claim 1, wherein the blocked isocyanate is modified by a hydrophilic compound containing an active hydrogen group in addition to the high molecular weight polyol having a number average molecular weight of 250 or more.

## Patentansprüche

1. Blockiertes Isocyanat, bei dem eine Polyisocyanatverbindung mit einem Blockierungsmittel blockiert ist, wobei
das blockierte Isocyanat eine erste latente Isocyanatgruppe enthält, bei der eine Isocyanatgruppe mit einem ersten Blockierungsmittel blockiert ist, und eine zweite latente Isocyanatgruppe enthält, bei der eine Isocyanatgruppe mit einem zweiten Blockierungsmittel blockiert ist,
das erste Blockierungsmittel durch die nachstehende allgemeine Formel (1) dargestellt wird und eine höhere Katalysatoraktivität, die die Isocyanatgruppe aktiviert, aufweist, als die des zweiten Blockierungsmittels, und
die Polyisocyanatverbindung ein Reaktionsprodukt aus einem hochmolekularen Polyol mit einem zahlenmittleren Molekulargewicht von 250 oder mehr und Polyisocyanat ist, und
das hochmolekulare Polyol mit einem zahlenmittleren Molekulargewicht von 250 oder mehr mindestens ein Polyol ist, das ausgewählt ist aus einer Gruppe bestehend aus Polycarbonatpolyol, Polyesterpolyol und Polytetramethylenetherglykol: 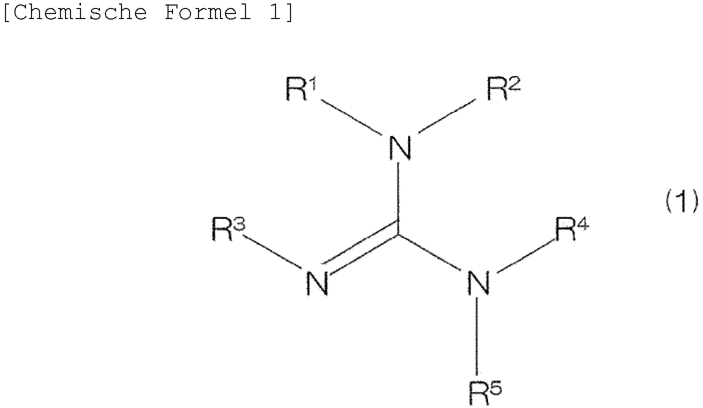 (in der Formel stellen R¹ bis R³ eine Kohlenwasserstoffgruppe mit 1 bis 12 Kohlenstoffatomen oder ein Wasserstoffatom dar, und mindestens eines von R¹ bis R³ stellt ein Wasserstoffatom dar, und R¹ und R³ sind optional unter Bildung eines Heterocyclus aneinander gebunden; R⁴ und R⁵ stellen eine Kohlenwasserstoffgruppe mit 1 bis 12 Kohlenstoffatomen dar, R⁴ und R¹ sind optional unter Bildung eines Heterocyclus aneinander gebunden, und R⁵ und R³ sind optional unter Bildung eines Heterocyclus aneinander gebunden).

2. Blockiertes Isocyanat gemäß Anspruch 1, wobei das Polyisocyanat aus aliphatischem Polyisocyanat besteht.

3. Blockiertes Isocyanat gemäß Anspruch 1, wobei
das zweite Blockierungsmittel zwei Arten von Blockierungsmitteln enthält, die ausgewählt sind aus einer Gruppe bestehend aus einer Imidazolverbindung, einer Alkoholverbindung, einer Phenolverbindung, einer aktiven Methylenverbindung, einer Aminverbindung, einer Iminverbindung, einer Oximverbindung, einer Carbaminsäureverbindung, einer Harnstoffverbindung, einer Säureamidverbindung, einer Säureimidverbindung, einer Triazolverbindung, einer Pyrazolverbindung, einer Mercaptanverbindung, einem Bisulfit, einer Imidazolinverbindung und einer Pyrimidinverbindung.

4. Blockiertes Isocyanat gemäß Anspruch 1, wobei das blockierte Isocyanat zusätzlich zu dem hochmolekularen Polyol mit einem zahlenmittleren Molekulargewicht von 250 oder mehr durch eine hydrophile Verbindung modifiziert ist, die eine aktive Wasserstoffgruppe enthält.

## Revendications

1. Isocyanate bloqué dans lequel un composé polyisocyanate est bloqué avec un agent de blocage, dans lequel
l'isocyanate bloqué contient un premier groupe isocyanate latent dans lequel un groupe isocyanate est bloqué avec un premier agent de blocage, et un second groupe isocyanate latent dans lequel un groupe isocyanate est bloqué avec un second agent de blocage,
le premier agent de blocage est représenté par la formule générale (1) ci-dessous et présente une activité catalytique supérieure qui active le groupe isocyanate à celle du second agent de blocage, et
le composé polyisocyanate est un produit de réaction d'un polyol de poids moléculaire élevé présentant un poids moléculaire moyen en nombre de 250 ou plus et du polyisocyanate, et
le polyol de poids moléculaire élevé présentant un poids moléculaire moyen en nombre de 250 ou plus est au moins un polyol sélectionné parmi le groupe constitué de polycarbonatepolyol, polyesterpolyol et polytétraméthylène éther glycol : 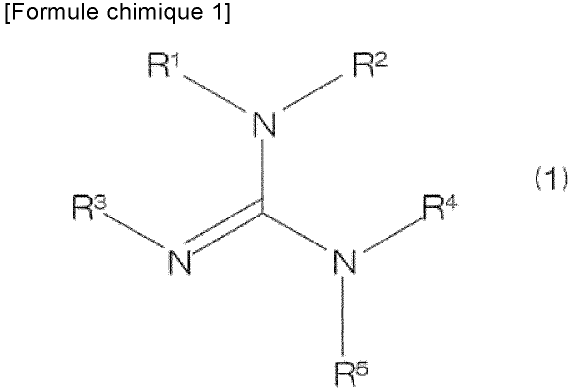 (dans la formule, R¹ à R³ représentent un groupe hydrocarboné présentant 1 à 12 atomes de carbone ou un atome d'hydrogène et au moins l'un de R¹ à R³ représente un atome d'hydrogène, et R¹ et R³ sont facultativement liés l'un à l'autre pour former un hétérocycle ; R⁴ et R⁵ représentent un groupe hydrocarboné présentant de 1 à 12 atomes de carbone, R⁴ et R¹ sont facultativement liés l'un à l'autre pour former un hétérocycle, et R⁵ et R³ sont facultativement liés l'un à l'autre pour former un hétérocycle).

2. Isocyanate bloqué selon la revendication 1, dans lequel le polyisocyanate est constitué de polyisocyanate aliphatique.

3. Isocyanate bloqué selon la revendication 1, dans lequel
le second agent de blocage contient deux types d'agents de blocage sélectionnés parmi le groupe constitué d'un composé imidazole, un composé alcool, un composé phénol, un composé méthylène actif, un composé amine, un composé imine, un composé oxime, un composé acide carbamique, un composé d'urée, un composé d'amide acide, un composé d'imide acide, un composé de triazole, un composé de pyrazole, un composé mercaptan, un bisulfite, un composé imidazoline, et un composé pyrimidine.

4. Isocyanate bloqué selon la revendication 1, dans lequel l'isocyanate bloqué est modifié par un composé hydrophile contenant un groupe hydrogène actif en plus du polyol de poids moléculaire élevé présentant un poids moléculaire moyen en nombre de 250 ou plus.
